# EUROPEAN PATENT APPLICATION

(11) **EP 4 514 026 A1**
(43) Date of publication of application: **26.02.2025**
(21) Application number: 22938486.2
(22) Date of filing: 20.04.2022
(51) Int. Cl.: H04W 72/1268, H04W 16/28

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/018300
(87) International publication number: WO 2023/203684

(57) **Abstract**

A terminal according to one aspect of the present disclosure includes: a control section that judges resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and a transmitting section that transmits at least one of the first UL channel and the second UL channel. According to an aspect of the present disclosure, UL transmission can be appropriately controlled even when the UL transmission is performed by using a plurality of panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, a UE can use one of a plurality of panels (or a plurality of beams) for uplink (UL) transmission. For Rel. 18 or later versions, it is studied to support simultaneous UL transmission using a plurality of panels (for example, simultaneous multi-panel UL transmission (SiMPUL)) to one or more transmission/reception points (TRPs), for improvement of UL throughput/reliability.

However, how to control such UL transmission using a plurality of panels (for example, simultaneous UL transmission) has not been studied sufficiently. Unless UL transmission using a plurality of panels is performed appropriately, degradation in system performance, such as throughput reduction, may occur.

Thus, an object of the present disclosure is to provide a terminal, a radio communication method, and a base station that enable appropriate control of UL transmission even when the UL transmission is performed by using a plurality of panels.

### Solution to Problem

A terminal according to one aspect of the present disclosure includes: a control section that judges resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and a transmitting section that transmits at least one of the first UL channel and the second UL channel. Advantageous Effects of Invention

According to an aspect of the present disclosure, UL transmission can be appropriately controlled even when the UL transmission is performed by using a plurality of panels.

### Brief Description of Drawings

[FIG. 1] FIG. 1 is a diagram to show an example of association between precoder types and TPMI indices.
[FIG. 2] FIG. 2A to FIG. 2C are diagrams to show examples of PUSCH transmission using a plurality of panels.
[FIG. 3] FIG. 3A and FIG. 3B are diagrams to show examples of UL transmission control based on priorities.
[FIG. 4] FIG. 4 is a diagram to show another example of the UL transmission control based on priorities.
[FIG. 5] FIG. 5A to FIG. 5C are diagrams to show examples of PUSCH/PUCCH simultaneous transmission using a plurality of panels.
[FIG. 6] FIG. 6 is a diagram to show an example related to processing of PUCCH/PUSCH overlaps according to a first embodiment.
[FIG. 7] FIG. 7 is a diagram to show another example related to the processing of PUCCH/PUSCH overlaps according to the first embodiment.
[FIG. 8] FIG. 8 is a diagram to show an example of resolving of PUCCH/PUSCH overlaps in the same panel.
[FIG. 9] FIG. 9 is a diagram to show an example of PUCCH/PUSCH transmissions according to case 1.
[FIG. 10] FIG. 10 is a diagram to show an example of PUCCH/PUSCH transmissions according to case 2/3/4.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (PUSCH Precoder)

For NR, it is studied that a UE supports at least one of codebook (CB) based transmission and non-codebook (NCB) based transmission.

For example, it is studied that the UE judges a precoder (precoding matrix) for at least one of CB based uplink shared channel (Physical Uplink Shared Channel (PUSCH)) transmission and NCB based PUSCH transmission by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by the precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of the PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type "full coherent" may be assumed to support the precoder types "partial coherent" and "noncoherent." A UE that supports the precoder type "partial coherent" may be assumed to support the precoder type "non-coherent."

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

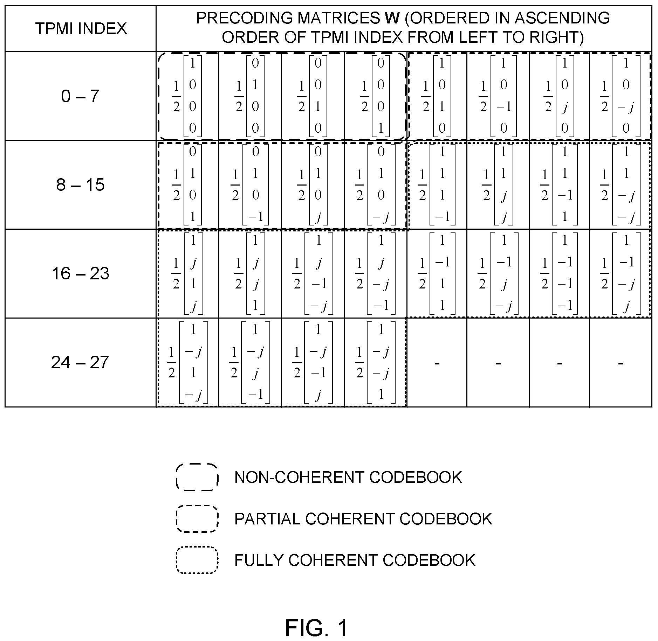

FIG. 1 is a diagram to show an example of association between precoder types and TPMI indices. FIG. 1 corresponds to a table of precoding matrices W for single-layer (rank 1) transmission using four antenna ports with DFT-s-OFDM (Discrete Fourier Transform spread OFDM, transform precoding is enabled).

In FIG. 1, when a precoder type (codebookSubset) is "fullyAndPartialAndNonCoherent," a UE is notified of a TPMI of any one of 0 to 27, for the single-layer transmission. When a precoder type is "partialAndNonCoherent," the UE is configured with a TPMI of any one of 0 to 11, for the single-layer transmission. When a precoder type is "nonCoherent," the UE is configured with a TPMI of any one of 0 to 3, for the single-layer transmission.

Note that, as shown in FIG. 1, a precoding matrix with only one of the components in each column being other than 0 may be referred to as a non-coherent codebook. A precoding matrix with only a given number of components of (not all of) the components in each column being other than 0 may be referred to as a partial coherent codebook. A precoding matrix with none of the components in each column being 0 may be referred to as a fully coherent codebook.

Each of the non-coherent codebook and partial coherent codebook may be referred to as an antenna selection precoder. The fully coherent codebook may be referred to as a non-antenna selection precoder.

Note that, in the present disclosure, the partial coherent codebook may correspond to codebooks (i.e., codebooks of TPMI = 4 to 11 in a case of single-layer transmission with four antenna ports) obtained by eliminating codebooks corresponding to TPMIs specified for a UE configured with a non-coherent codebook subset (for example, an RRC parameter "codebookSubset" = "nonCoherent") from codebooks (precoding matrices) corresponding to TPMIs specified by DCI for codebook based transmission for a UE configured with a partial coherent codebook subset (for example, an RRC parameter "codebookSubset" = "partialAndNonCoherent").

Note that, in the present disclosure, the fully coherent codebook may correspond to codebooks (i.e., codebooks of TPMI = 12 to 27 in the case of single-layer transmission with four antenna ports) obtained by eliminating codebooks corresponding to TPMIs specified for a UE configured with the partial coherent codebook subset (for example, the RRC parameter "codebookSubset" = "partialAndNonCoherent") from codebooks (precoding matrices) corresponding to TPMIs specified by DCI for codebook based transmission for a UE configured with a fully coherent codebook subset (for example, an RRC parameter "codebookSubset" = "fullyAndPartialAndNonCoherent").

### (Spatial Relation for SRS and PUSCH)

A UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a given number of SRS resources (may group the given number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic SRS (A-SRS, AP-SRS). Note that the UE may transmit a P-SRS and an SP-SRS periodically (or periodically after activation), and transmit an A-SRS, based on an SRS request of DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with codebook based transmission or non-codebook based transmission usage may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a given reference signal and the SRS. The given reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information for the SRS may include, as an index for the given reference signal described above, at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information for the SRS may include a serving cell index, a BWP index (BWP ID), and the like corresponding to the given reference signal described above.

In NR, transmission of an uplink signal may be controlled based on presence or absence of beam correspondence (BC). The BC may be, for example, a capability for a given node (for example, base station or UE) to determine a beam (transmit beam, Tx beam) to be used for transmission of a signal, based on a beam (receive beam, Rx beam) to be used for reception of a signal.

Note that the BC may be referred to as transmit/receive beam correspondence (Tx/Rx beam correspondence), beam reciprocity, beam calibration, calibrated/non-calibrated, reciprocity calibrated/noncalibrated, degree of correspondence, degree of matching, or the like.

For example, without the BC, the UE may transmit an uplink signal (for example, PUSCH, PUCCH, SRS, or the like) by using a beam (spatial domain transmission filter) the same as that for an SRS (or SRS resource) indicated by a base station, based on a result of measurement of one or more SRSs (SRS resources).

On the other hand, with the BC, the UE may transmit an uplink signal (for example, PUSCH, PUCCH, SRS, or the like) by using a beam (spatial domain transmission filter) the same as or corresponding to a beam (spatial domain reception filter) to be used for reception of a given SSB or CSI-RS (or CSI-RS resource).

With respect to a given SRS resource, when spatial relation information related to an SSB or CSI-RS and an SRS is configured (for example, with the BC), the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a given SRS (target SRS) resource, when spatial relation information related to another SRS (reference SRS) and the SRS (target SRS) is configured (for example, without the BC), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a given field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the given field.

For a PUSCH, when codebook based transmission is used, two SRS resources may be configured for the UE by RRC, and one of the two SRS resources may be indicated for the UE by DCI (a given field of one bit). For a PUSCH, when non-codebook based transmission is used, four SRS resources may be configured for the UE by RRC, and one of the four SRS resources may be indicated for the UE by DCI (a given field of two bits). In order to use a spatial relation other than the two or four spatial relations configured by RRC, RRC reconfiguration is required.

Note that, for a spatial relation of an SRS resource to be used for a PUSCH, a DL-RS may be configured. For example, with respect to an SP-SRS, a spatial relation of a plurality of (for example, up to 16) SRS resources may be configured for the UE by RRC, and one of the plurality of SRS resources may be indicated for the UE by a MAC CE.

### (Transmission with Plurality of Panels)

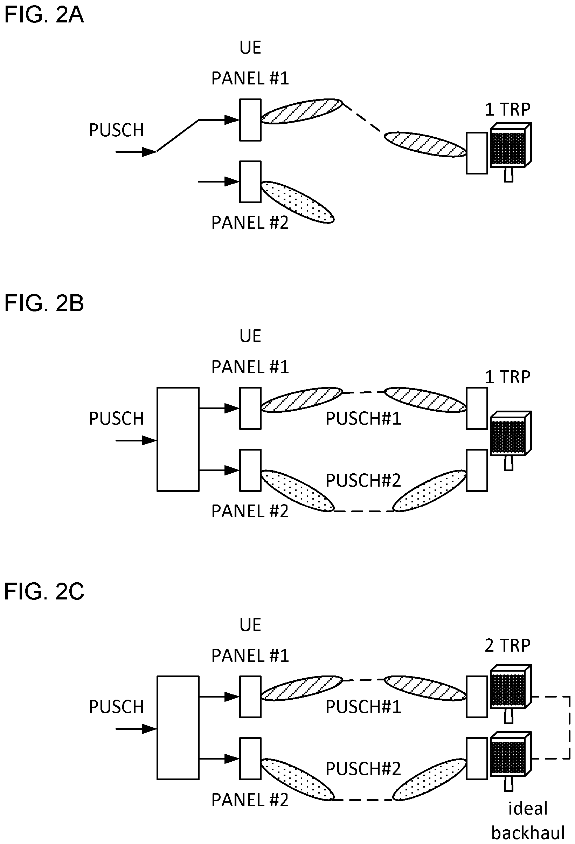

In a UE in Rel. 15 and Rel. 16, only one beam and one panel are used for UL transmission at one time point (FIG. 2A). For Rel. 17, for improvement of UL throughput and reliability, simultaneous UL transmission with a plurality of beams and a plurality of panels for one or more TRPs is under study.

For simultaneous UL transmission using a plurality of beams and a plurality of panels, reception by one TRP with a plurality of panels (FIG. 2B), or reception by two TRPs with an ideal backhaul (FIG. 2C) is under study. A single PDCCH for scheduling of a plurality of PUSCHs (for example, simultaneous transmission of PUSCH #1 and PUSCH #2) is under study. Support for panel-specific transmission and introduction of a panel ID are under study.

A base station may configure or indicate panel-specific transmission for UL transmission by using UL TCI or a panel ID. The UL TCI (UL TCI state) may be based on signaling similar to DL beam indication supported in Rel. 15. A panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of a target RS, a target channel, and a reference RS (for example, a DL RS resource configuration or spatial relation information).

### (UL TCI state)

For Rel-16 NR, it is under study that a UL TCI state is used as a beam indication method in UL. Notification of the UL TCI state is similar to notification of a DL beam (DL TCI state) of a UE. Note that a DL TCI state and a TCI state for a PDCCH/PDSCH may be interchangeably interpreted.

A channel/signal (which may be referred to as a target channel/RS) for which the UL TCI state is configured (specified) may be, for example, at least one of a PUSCH (DMRS of the PUSCH), a PUCCH (DMRS of the PUCCH), a random access channel (Physical Random Access Channel (PRACH)), an SRS, or the like.

An RS (source RS) to have a QCL relationship with the channel/signal may be, a DL RS (for example, an SSB, a CSI-RS, a TRS, or the like) or may be a UL RS (for example, an SRS, an SRS for beam management, or the like), for example.

In a UL TCI state, an RS to have a QCL relationship with the channel/signal may be associated with a panel ID for reception or transmission of the RS. The association may be explicitly configured (or specified) by higher layer signaling (for example, RRC signaling, MAC CE, or the like) or may be implicitly judged.

The correspondence between the RS and the panel ID may be configured being included in UL TCI state information or may be configured being included in at least one of resource configuration information, spatial relation information, and the like of the RS.

A QCL type indicated by the UL TCI state may be any one of existing QCL types A to D, may be another QCL type, or may include a given spatial relation, an associated antenna port (port index), or the like.

When an associated panel ID is specified (for example, specified by DCI) for a UL transmission, the UE may perform the UL transmission by using a panel corresponding to the panel ID. A panel ID may be associated with a UL TCI state. When a UL TCI state is specified (or activated) for a given UL channel/signal, the UE may identify a panel to be used for transmission of the UL channel/signal in accordance with a panel ID associated with the UL TCI state.

### (Traffic Types)

In future radio communication systems (for example, NR), traffic types (also referred to as services, service types, communication types, use cases, or the like), such as further enhancement of mobile broadband (for example, enhanced Mobile Broadband (eMBB)), machine type communication that implements multiple simultaneous connection (for example, massive Machine Type Communications (mMTC), Internet of Things (IoT)), and highly reliable and low-latency communication (for example, Ultra-Reliable and Low-Latency Communications (URLLC)), are assumed. For example, in URLLC, lower latency and higher reliability in comparison to those of eMBB are required.

The traffic type may be identified based on at least one of the following in a physical layer.
- Logical channel having different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Given field in DCI (for example, a newly added field or reuse of an existing field)

Specifically, the traffic type of an HARQ-ACK for a PDSCH may be determined based on at least one of the following.
- MCS index table used for determination of at least one of the modulation order, target code rate, and transport block size (TBS) of the PDSCH (for example, whether to use MCS index table 3)
- RNTI used for CRC scrambling of DCI used for scheduling of the PDSCH (for example, which one of a C-RNTI and an MCS-C-RNTI is used for the CRC scrambling)

The traffic type of an SR may be determined based on a higher layer parameter used as an identifier of the SR (SR-ID). The higher layer parameter may indicate whether the traffic type of the SR is eMBB or URLLC.

The traffic type of CSI may be determined based on configuration information related to a CSI report (CSIreportSetting), a DCI type or DCI transmission parameter to be used as a trigger, and the like. The configuration information, DCI type, and the like may indicate whether the traffic type of the CSI is eMBB or URLLC. The configuration information may be a higher layer parameter.

The traffic type of a PUSCH may be determined based on at least one of the following.
- MCS index table used for determination of at least one of the modulation order, target code rate, and TBS of the PUSCH (for example, whether to use MCS index table 3)
- RNTI used for CRC scrambling of DCI used for scheduling of the PUSCH (for example, which one of a C-RNTI and an MCS-C-RNTI is used for the CRC scrambling)

The traffic type may be associated with communication requirements (requirements such as latency and error rate, requirement conditions), data types (audio, data, and the like), and the like.

A difference between requirements for URLLC and requirements for eMBB may be that latency in URLLC is lower than latency in eMBB or that the requirements for URLLC include a reliability requirement.

For example, requirements of user (U) plane latency for eMBB may include that downlink U-plane latency is 4 ms and that uplink U-plane latency is 4 ms. In contrast, requirements of U-plane latency for URLLC may include that downlink U-plane latency is 0.5 ms and that uplink U-plane latency is 0.5 ms. A requirement of reliability for URLLC may include a requirement that the error rate of 32 bytes is 10-5 in U-plane latency of 1 ms.

As enhanced Ultra Reliable and Low Latency Communications (eURLLC), enhancement of traffic reliability mainly for unicast data is under study. In the following, both of URLLC and eURLLC will be simply referred to as "URLLC," unless specified otherwise.

### (Configuration of Priorities)

For NR in Rel. 16 or later versions, it is under study to configure a plurality of priority levels (for example, two levels) for a given signal or channel. For example, it is assumed that separate priorities are configured for respective signals or channels corresponding to different traffic types (also referred to as services, service types, communication types, use cases, or the like) for control of communication (for example, transmission control in collision and the like). This allows different priorities to be configured depending on the service types or the like for the same signal or channel to control the communication.

The priorities may be configured for at least one of a signal (for example, UCI such as an HARQ-ACK, a reference signal, or the like), a channel (PDSCH, PUSCH, PUCCH, or the like), a reference signal (for example, channel state information (CSI), sounding reference signal (SRS), or the like), a scheduling request (SR), and an HARQ-ACK codebook. The priority may be configured for each of a PUCCH to be used for transmission of an SR, a PUCCH to be used for transmission of an HARQ-ACK, and a PUCCH to be used for transmission of CSI.

For the priorities, a first priority (for example, high) and a second priority (for example, low) lower than the first priority may be defined. Alternatively, three or more levels of priorities may be configured.

For example, the priorities may be configured for an HARQ-ACK for a PDSCH to be dynamically scheduled, an HARQ-ACK for a semi-persistent PDSCH (SPS PDSCH), and an HARQ-ACK for SPS PDSCH release. Alternatively, the priorities may be configured for HARQ-ACK codebooks corresponding to these HARQ-ACKs. Note that, when the priority is configured for the PDSCH, the priority of the PDSCH may be interpreted as the priority of the HARQ-ACK for the PDSCH.

The priorities may be configured for a dynamic grant based PUSCH, a configured grant based PUSCH, and the like.

A base station may notify a UE of information related to the priority, by using at least one of higher layer signaling and DCI. For example, the priority of a scheduling request may be configured by a higher layer parameter (for example, schedulingRequestPriority). The priority of an HARQ-ACK for a PDSCH (for example, dynamic PDSCH) scheduled by DCI may be notified using the DCI. The priority of an HARQ-ACK for an SPS PDSCH may be configured by a higher parameter (for example, HARQ-ACK-Codebook-indicator-forSPS), or may be notified using DCI indicating activation of the SPS PDSCH. A P-CSI/SP-CSI to be transmitted on a PUCCH may be configured with a given priority (for example, low). On the other hand, the priority of an A-CSI/SP-CSI to be transmitted on a PUSCH may be notified using DCI (for example, DCI for triggering or DCI for activation).

The priority of a dynamic grant based PUSCH may be notified using DCI scheduling the PUSCH. The priority of a configured grant based PUSCH may be configured by a higher layer parameter (for example, priority). A P-SRS/SP-SRS and an A-SRS triggered by DCI (for example, DCI format 0_1/DCI format 2_3) may be configured with a given priority (for example, low).

### (Priority Related to CSI Report)

In Rel-15/16 NR, a CSI report (which may be referred to as CSI feedback or the like) may relate to a priority value. For example, the priority value may be defined using a function Pri_{iCSI}(y, k, c, s). The priority may be interpreted as a CSI report priority, a CSI priority, or the like, and vice versa.

For example, Pri_{iCSI}(y, k, c, s) may be calculated by the following equation (1). PriiCSI (y, k, c, s) = 2 · Ncells * Ms · y + Ncells · Ms · k + Ms · c + s

Here, y may be a value based on a CSI report type (A-CSI report, SP-CSI report, or P-CSI report) and a channel for the CSI report to be transmitted on (uplink shared channel (Physical Uplink Shared Channel (PUSCH)) or uplink control channel (Physical Uplink Control Channel (PUCCH))).

For example, y may be y = 0 for an A-CSI report transmitted on a PUSCH, y = 1 for an SP-CSI report transmitted on a PUSCH, y = 2 for an SP-CSI report transmitted on a PUCCH, or y = 3 for a P-CSI report transmitted on a PUCCH.

k may be a value based on whether a CSI report includes an L1-RSRP/SINR (for example, k = 0 when the CSI report includes an L1-RSRP/SINR, or k = 1 when the CSI report includes no L1-RSRP/SINR). c may be a serving cell index. s may be a report configuration ID (reportConfigID). Note that the L1-RSRP/L1-SINR may be configured for different CSI reports.

N_{cells} may be a value of the maximum number of serving cells to be configured (higher layer parameter "maxNrofServingCells"). Mₛ may be a value of the maximum number of CSI report configurations to be configured (higher layer parameter "maxNrofCSI-ReportConfigurations").

When a value of Pri_{iCSI}(y, k, c, s) related to a first CSI report is smaller than a value of Pri_{iCSI} (y, k, c, s) related to a second CSI report, this may mean that the first CSI report has a high priority as compared with the second CSI report.

With Equation 1, for the same amount of report in the same serving cell, the priority is higher in this order: A-CSI on PUSCH > SP-CSI on PUSCH > SP-CSI on PUCCH > P-CSI on PUCCH.

In a case where time occupancies of two physical channels scheduled to transmit two CSI reports overlap with each other in at least one OFDM symbol and that the two CSI reports are transmitted on the same carrier, this may be referred to as collision of the two CSI reports.

In Rel-15/16 NR, in a case where a UE is configured to transmit two colliding CSI reports and where the respective CSI report types are different from each other (in other words, the y values of the CSI reports are different from each other), one CSI report with a higher Pri_{iCSI}(y, k, c, s) may not be transmitted and the other CSI report with a lower Pri_{iCSI} (y, k, c, s) may be transmitted, except a case where both the CSI reports are CSI on PUCCH.

In Rel-15/16 NR, in a case where a UE is configured to transmit two colliding CSI reports, and where the respective CSI report types are the same as each other or that the respective CSI reports are different from each other and both the CSI reports are CSI on PUCCH, both the CSI reports may be multiplexed or one of the CSI reports may be dropped based on Pri_{iCSI} (y, k, c, s).

### (Overlap in UL Transmission)

When a plurality of UL signals/UL channels overlap (or have collision) with each other, the UE may control the UL transmission, based on the priorities.

Overlap between a plurality of UL signals/UL channels may be a case where time resources (or time resources and frequency resources) of the plurality of UL signals/UL channels overlap with each other, or a case where transmission timings of the plurality of UL signals/UL channels overlap with each other. The time resources may be interpreted as the time domain or time-domain. The time resources may be symbol, slot, sub-slot, or subframe units.

Overlap between a plurality of UL signals/UL channels in the same UE (for example, intra-UE) may mean that the plurality of UL signals/UL channels overlap with each other in at least the same time resource (for example, symbol). Collision between UL signals/UL channels in different UEs (for example, inter-UE) may mean that the plurality of UL signals/UL channels overlap with each other in the same time resource (for example, symbol) and frequency resource (for example, RB).

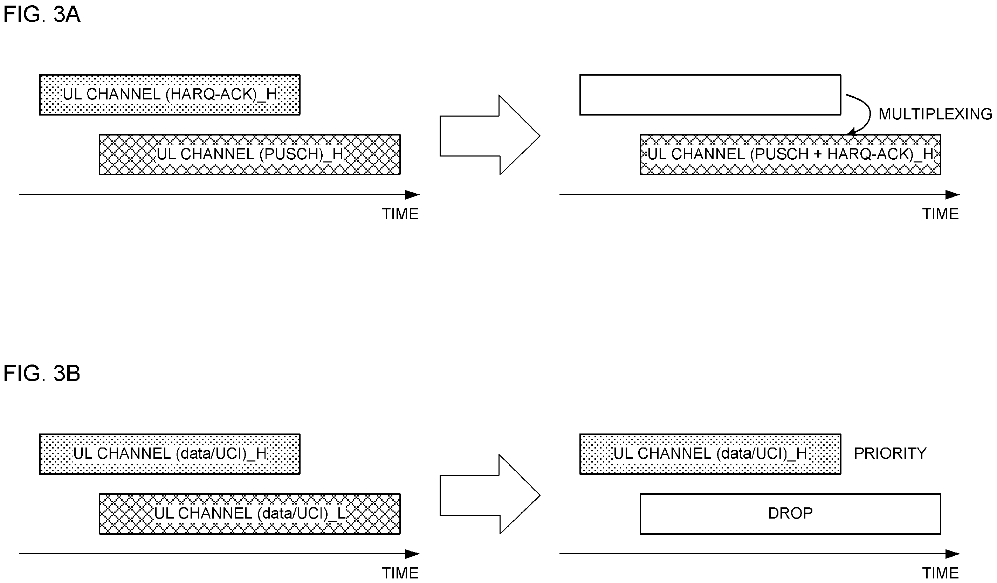

For example, when a plurality of UL signals/UL channels each having the same priority overlap with each other, the UE performs control to transmit the plurality of UL signals/UL channels multiplexed on one UL channel (see FIG. 3A).

FIG. 3A shows a case where an HARQ-ACK (or a PUCCH for HARQ-ACK transmission) configured with the first priority (high) and UL data/UL-SCH (or a PUSCH for UL data/UL-SCH transmission) configured with the first priority (high) overlap with each other. In this case, the UE multiplexes (maps) the HARQ-ACK on the PUSCH to transmit both the UL data and the HARQ-ACK.

When a plurality of UL signals/UL channels having different priorities overlap with each other, the UE may perform control to perform a UL transmission with a high priority (for example, prioritize a UL transmission with a high priority) and not to perform a UL transmission with a low priority (for example, drop a UL transmission with a low priority) (see FIG. 3B).

FIG. 3B shows a case where UL data/HARQ-ACK (or a UL channel for UL data/HARQ-ACK transmission) configured with the first priority (high) and UL data/HARQ-ACK (or a UL channel for UL data/HARQ-ACK transmission) configured with the second priority (low) overlap with each other. In this case, the UE performs control to drop the UL data/HARQ-ACK with the low priority and prioritize and transmit the UL data/HARQ-ACK with the high priority. Note that the UE may change (for example, postpone or shift) transmission timing of the UL transmission with the low priority.

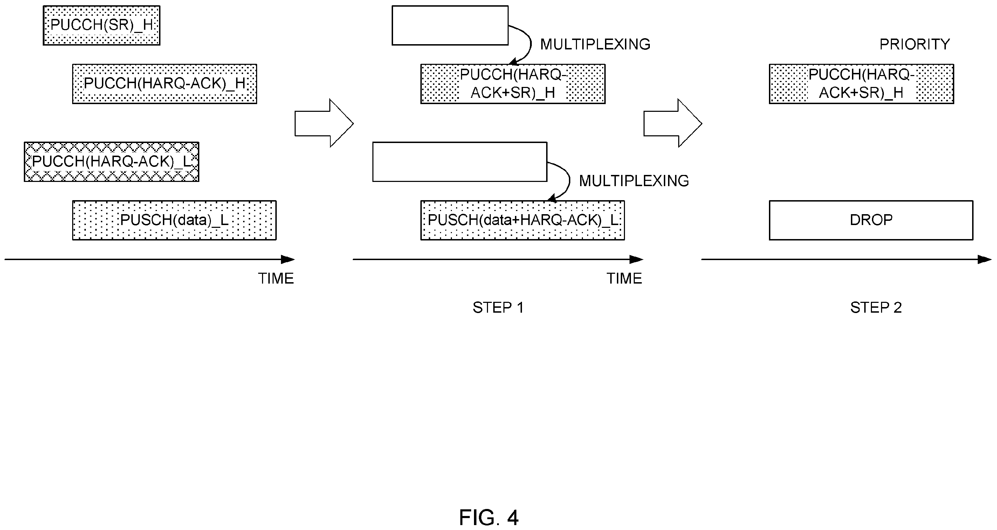

When more than two (or three or more) UL signals/UL channels overlap with each other in the time domain, the transmission may be controlled in two steps (see FIG. 4).

In step 1, between UL transmissions of the same priority, one UL channel is selected on which UL signals to be transmitted are multiplexed. In FIG. 4, an SR (or a PUCCH for SR transmission) and an HARQ-ACK (or a PUCCH for HARQ-ACK transmission) each having the first priority (high) may be multiplexed on a given UL channel (here, the PUCCH for HARQ-ACK transmission). Similarly, an HARQ-ACK (or a PUCCH for HARQ-ACK transmission) and data (or a PUSCH for data/UL-SCH transmission) each having the second priority (low) may be multiplexed on a given UL channel (here, the PUSCH).

In step 2, between UL transmissions having different priorities, control may be performed to prioritize and transmit a UL transmission with a high priority and to drop a UL transmission with a low priority. In FIG. 4, the PUCCH for the SR and HARQ-ACK transmission having the first priority (high) may be prioritized and transmitted, and the PUSCH for the HARQ-ACK and data transmission having the second priority (low) may be dropped.

As described above, the UE can solve collision between a plurality of UL transmissions having the same priority in step 1, and solve collision between a plurality of UL transmissions having different priorities in step 2.

### (Collision Handling for PUCCH and PUSCH)

In the following, specific processing (collision handling) when various types of UL channels/signals overlap with each other, defined in Rel. 16 or earlier versions, will be described.

When a PUCCH resource (for example, a PUCCH for an SR) does not overlap in time with a PUSCH transmission after multiplexing (mapping) of UCI (for example, an HARQ-ACK), a UE may transmit the PUCCH by using the PUCCH resource.

When the PUCCH resource overlaps in time with the PUSCH transmission, the UE may multiplex (map/piggyback) HARQ-ACK information/CSI report on the PUSCH. In this case, the UE need not transmit an SR.

The UE need not transmit a PUSCH overlapping in time with a PUCCH in a slot.

When a plurality of PUCCHs overlap with each other, the UE performs multiplexing of UCI and then selects one PUCCH. When the one PUCCH overlaps in time with a PUSCH, collision handling between the PUCCH and the PUSCH is performed.

### (Collision Handling for SRS and PUCCH/PUSCH)

In a given serving cell, when a PUSCH transmission with a priority index "1" (PUSCH transmission with a priority index 1) or a PUCCH transmission with a priority index "1" (PUCCH transmission with a priority index 1) and an SRS transmission overlap with each other in terms of time, a UE does not transmit an SRS in a symbol(s) where the transmissions overlap with each other.

For a PUCCH and an SRS in the same carrier, when a semi-persistent (SP-)SRS/periodic (P-)SRS is configured in the same symbol(s) as that (those) of a PUCCH carrying only a CSI report, only an L1-RSRP report, or only an L1-SINR, the UE does not transmit the SRS.

For a PUCCH and an SRS in the same carrier, when an SP-SRS/P-SRS is configured in the same symbol(s) as that (those) of a PUCCH carrying at least one of an HARQ-ACK, a link recovery request, and an SR, the UE does not transmit the SRS. When transmission of an aperiodic (AP-)SRS in the same symbol(s) as that (those) of a PUCCH carrying at least one of an HARQ-ACK, a link recovery request, and an SR is triggered for the UE, the UE does not transmit the SRS. In these cases, only an SRS symbol(s) overlapping with the symbol(s) of a corresponding PUCCH is dropped.

For a PUCCH and an SRS in the same carrier, when an AP-SRS is configured in the same symbol(s) as that (those) of a PUCCH carrying only an SP-CSI/P-CSI report, only an SP-L1-RSRP/P-L1-RSRP report, or only an L1-SINR, the UE does not transmit the PUCCH.

### (Collision Handling for SRSs)

In a case where a P-SRS/SP-SRS is configured in symbols for triggering an SRS resource with a resource type (RRC parameter "resourceType") being set at "aperiodic," a UE transmits an AP-SRS resource, drops the P-SRS/SP-SRS in an overlapping symbol(s), and transmits the P-SRS/SP-SRS in a non-overlapping symbol(s).

In a case where a P-SRS is configured in symbols for triggering an SRS resource with a resource type (RRC parameter "resourceType") being set at "semi-persistent," the UE transmits an SP-SRS resource, drops the P-SRS in an overlapping symbol(s), and transmits the P-SRS in a non-overlapping symbol(s).

Note that one reason why simultaneous transmission of a plurality of channels (for example, a PUSCH and a PUCCH, an SRS and a PUCCH, or the like) is not supported in Rel. 15/16 is for suppressing an increase in a power consumption/peak-to-average power ratio (PAPR) of a UE.

### (simultaneous multi-panel UL transmission (SiMPUL))

For future radio communication systems (for example, Rel. 18 (or later versions)), it is studied that simultaneous UL transmission (for example, simultaneous multi-panel UL transmission (SiMPUL)) using a plurality of panels is supported for one or more transmission/reception points (TRPs) to improve UL throughput/reliability.

In the simultaneous UL transmission using a plurality of panels, a UE may transmit a physical uplink control channel (PUCCH) and a physical uplink shared channel (PUSCH).

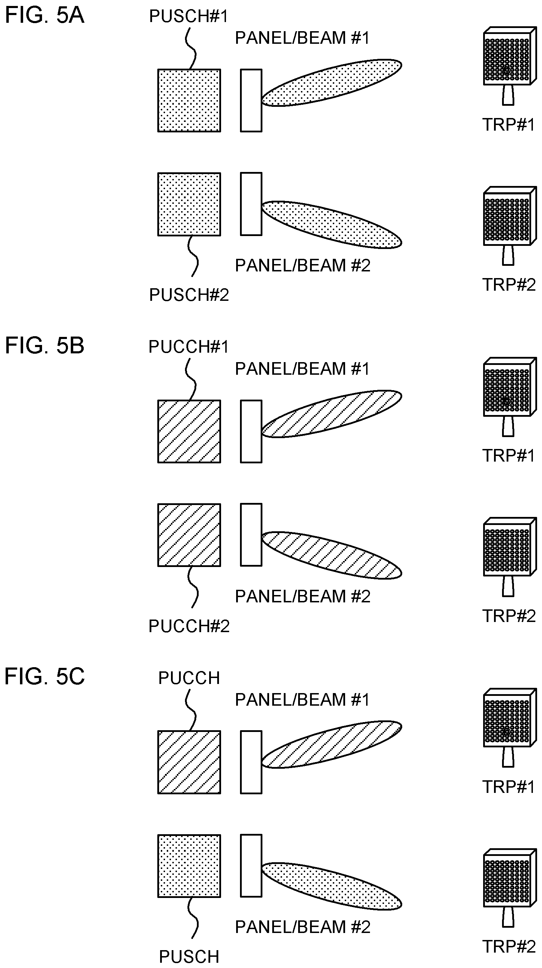

Specifically, it is studied that a UE performs simultaneous transmission of a plurality of PUSCHs in simultaneous UL transmission using a plurality of panels (see FIG. 5A). In FIG. 5A, PUSCH #1 and PUSCH #2 are transmitted in respective different panels and overlap with each other in the time domain.

It is also studied that a UE performs simultaneous transmission of a plurality of PUCCHs in simultaneous UL transmission using a plurality of panels (see FIG. 5B). In FIG. 5B, PUCCH #1 and PUCCH #2 are transmitted in respective different panels and overlap with each other in the time domain.

It is also studied that a UE performs simultaneous transmission of a PUSCH and a PUCCH in simultaneous UL transmission using a plurality of panels (see FIG. 5C). In FIG. 5C, a PUCCH and a PUSCH are transmitted in respective different panels and overlap with each other in the time domain.

It is conceivable that different types of overlaps of UL channels to be described below occur in the same time domain:
- overlap of a PUCCH and a PUCCH having the same priority
- overlap of a PUSCH and a PUSCH having the same priority
- overlap of a PUCCH and a PUSCH having the same priority
- overlap of a PUCCH and a PUCCH having different priorities
- overlap of a PUSCH and a PUSCH having different priorities
- overlap of a PUCCH and a PUSCH having different priorities

It is assumed that channels to be transmitted differ according to the order for resolving these types of overlaps. Hence, a rule about in which order overlaps of the above types are to be resolved need be defined.

In Rel. 17, in a case where a plurality of (for example, two) PUCCH/PUSCH transmissions having different priorities overlap with each other (in the time domain), the UE initially resolves an overlap of a PUCCH/PUSCH transmission having a smaller (lower) priority index.

At this time, when multiplexing/mapping of pieces of UCI having different priorities is supported, firstly, the UE resolves an overlap of a PUCCH/PUSCH transmission having a greater (higher) priority index.

Secondly, the UE resolves an overlap between PUCCH transmissions with different priority indices.

Thirdly, the UE resolves an overlap between PUCCH and PUSCH transmissions with different priority indices.

When multiplexing/mapping of pieces of UCI having different priorities is not supported, the UE cancels a PUCCH/PUSCH having a smaller priority index in accordance with a specific rule.

Note that, in the present disclosure, a priority index may correspond to a traffic type. In the present disclosure, a PUCCH/PUSCH may be associated with a priority index and the association may be configured/indicated for a UE.

In the present disclosure, a higher (larger) priority index may mean a higher priority, or a lower (smaller) priority index may mean a higher priority.

In simultaneous UL transmission using a plurality of panels, each PUCCH/PUSCH transmission is associated with a panel. Hence, overlaps of UL channels in the same time domain as those to be described below need be resolved:
- plurality of PUCCHs associated with the same panel and having the same priority
- plurality of PUSCHs associated with the same panel and having the same priority
- PUCCH and PUSCH associated with the same panel and having the same priority
- plurality of PUCCHs associated with the same panel and having different priorities
- plurality of PUSCHs associated with the same panel and having different priorities
- PUCCH and PUSCH associated with the same panel and having different priorities
- plurality of PUCCHs associated with different panels and having the same priority
- plurality of PUSCHs associated with different panels and having the same priority
- PUCCH and PUSCH associated with different panels and having the same priority
- plurality of PUCCHs associated with different panels and having different priorities
- plurality of PUSCHs associated with different panels and having different priorities
- PUCCH and PUSCH associated with different panels and having different priorities

It is also studied that each PUCCH/PUSCH transmission is associated with one or a plurality of panels in simultaneous UL transmission using a plurality of panels. When a PUSCH/PUCCH is associated with one panel, transmission of a different PUCCH/PUSCH is associated with a different panel.

In the present disclosure, transmission of a PUCCH/PUSCH associated with one panel may be referred to as single-panel PUCCH/PUSCH transmission. In the present disclosure, transmission of a PUCCH/PUSCH associated with a plurality of (for example, two) panels may be referred to as multi-panel PUCCH/PUSCH transmission.

In this case, overlaps in the same time domain as those to be described below are assumed:
- overlap between a single-panel PUSCH/PUCCH and a single-panel PUSCH/PUCCH
- overlap between a single-panel PUSCH/PUCCH and a multi-panel PUSCH/PUCCH
- overlap between a multi-panel PUSCH/PUCCH and a multi-panel PUSCH/PUCCH

For the overlap between a single-panel PUSCH/PUCCH and a single-panel PUSCH/PUCCH, overlaps of UL channels in the same time domain as those to be described below need be further resolved:
- plurality of PUCCHs associated with the same panel and having the same priority
- plurality of PUSCHs associated with the same panel and having the same priority
- PUCCH and PUSCH associated with the same panel and having the same priority
- plurality of PUCCHs associated with the same panel and having different priorities
- plurality of PUSCHs associated with the same panel and having different priorities
- PUCCH and PUSCH associated with the same panel and having different priorities
- plurality of PUCCHs associated with different panels and having the same priority
- plurality of PUSCHs associated with different panels and having the same priority
- PUCCH and PUSCH associated with different panels and having the same priority
- plurality of PUCCHs associated with different panels and having different priorities
- plurality of PUSCHs associated with different panels and having different priorities
- PUCCH and PUSCH associated with different panels and having different priorities

In this case, each PUCCH/PUSCH may be associated with one panel.

For the overlap between a single-panel PUSCH/PUCCH and a multi-panel PUSCH/PUCCH, overlaps of UL channels in the same time domain as those to be described below need be further resolved:
- single-panel PUSCH and multi-panel PUSCH having the same priority
- single-panel PUSCH and multi-panel PUCCH having the same priority
- single-panel PUCCH and multi-panel PUSCH having the same priority
- single-panel PUCCH and multi-panel PUCCH having the same priority
- single-panel PUSCH and multi-panel PUSCH having different priorities
- single-panel PUSCH and multi-panel PUCCH having different priorities
- single-panel PUCCH and multi-panel PUSCH having different priorities
- single-panel PUCCH and multi-panel PUCCH having different priorities

For the overlap between a multi-panel PUSCH/PUCCH and a multi-panel PUSCH/PUCCH, overlaps of UL channels in the same time domain as those to be described below need be further resolved:
- multi-panel PUSCH and multi-panel PUSCH having the same priority
- multi-panel PUSCH and multi-panel PUCCH having the same priority
- multi-panel PUCCH and multi-panel PUCCH having the same priority
- multi-panel PUSCH and multi-panel PUSCH having different priorities
- multi-panel PUSCH and multi-panel PUCCH having different priorities
- multi-panel PUCCH and multi-panel PUCCH having different priorities

However, operation with respect to the above-described PUSCH/PUCCH transmissions overlapping with each other is not clear, in a case where simultaneous transmission using a plurality of panels for PUSCHs and PUCCHs is supported. As long as this is not clear, system performance degradation such as reduction in throughput may occur.

Thus, the inventors of the present invention came up with the idea of a method for appropriately controlling UL transmission even when the UL transmission is performed by using a plurality of panels.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, an antenna group, a UE antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted. The UE capability value set may include, for example, the maximum number of SRS ports to be supported.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

In the present disclosure, drop, stop, cancel, puncture, rate match, postpone, and the like may be interchangeably interpreted.

In the embodiments of the present disclosure, configuring multi-DCI using multi-TRP, providing no CORESET pool index (RRC parameter "coresetPoolIndex"), and providing a CORESET pool index (RRC parameter "coresetPoolIndex") of a first value (for example, 0) to one or more first CORESETs and providing a CORESET pool index (RRC parameter "coresetPoolIndex") of a second value (for example, 1) to one or more second CORESETs in an active BWP in a serving cell may be interchangeably interpreted.

### (Radio Communication Method)

A PUCCH (for example, a PUCCH resource of UCI (for example, an SR/HARQ-ACK/CSI) and a panel may be associated with each other, based on a specific method.

The association may be configured for a UE by using higher layer signaling (for example, RRC/MAC CE), the association may be indicated for the UE by using DCI, or the UE may be notified of the association by RRC/MAC CE/DCI in combination.

A panel may be associated with a PUCCH resource, or may be associated with spatial relation information/TCI state of the PUCCH resource.

The association between a PUCCH and a panel may be performed by using association between a PUCCH resource and a specific parameter. The specific parameter may be a panel ID or may be a CORESET pool index/TRP ID.

The association between a PUCCH and a panel may be performed by using association between UCI (for example, an SR/HARQ-ACK/CSI) related to the PUCCH and a specific parameter. The specific parameter may be a panel ID or may be a CORESET pool index/TRP ID.

The association between a PUCCH and a panel may be performed by using association between a TCI state/spatial relation of the PUCCH and a specific parameter. The specific parameter may be a panel ID or may be a CORESET pool index/TRP ID.

The association between a PUCCH and a panel may be performed by using association between a PDCCH related to the PUCCH (for example, a PDCCH scheduling a PUCCH (scheduling PDCCH)) and a specific parameter. The specific parameter may be a panel ID or may be a CORESET pool index/TRP ID.

The association between a PUCCH and the specific parameter may be indicated in at least one of scheduling DCI and a configuration of a semi-static PUCCH transmission.

UCI (for example, an SR/HARQ-ACK/CSI report) and a panel may be associated with each other, based on a specific method.

The association may be configured for a UE by using higher layer signaling (for example, RRC/MAC CE), the association may be indicated for the UE by using DCI, or the UE may be notified of the association by RRC/MAC CE/DCI in combination.

A panel may be associated with a PUCCH resource for a CSI report/SR/HARQ-ACK, or may be associated with at least one of a CSI report configuration, an SR configuration, and a PDCCH/PDSCH corresponding to HARQ-ACK information. For CSI in a PUSCH, a panel may be associated with a PUSCH transmission of the CSI report.

A PUSCH transmission and a panel may be associated based on a specific method.

The association may be configured for a UE by using higher layer signaling (for example, RRC/MAC CE), the association may be indicated for the UE by using DCI, or the UE may be notified of the association by RRC/MAC CE/DCI in combination.

A panel may be associated with a PUSCH transmission (resource), may be associated with a TCI state/SRI/SRS resource of the PUSCH transmission, or may be associated with CSI (aperiodic (AP)/semi-persistent (SP) CSI) in the PUSCH.

The association between a PUSCH and a panel may be performed by using association between a PUSCH resource and a specific parameter. The specific parameter may be a panel ID or may be a CORESET pool index/TRP ID.

The association between a PUSCH and a panel may be performed by using association between a TCI state/spatial relation/SRI of the PUCCH and a specific parameter. The specific parameter may be a panel ID or may be a CORESET pool index/TRP ID.

The association between a PUSCH and a panel may be performed by using association between a PDCCH related to the PUSCH (for example, a PDCCH scheduling a PUSCH (scheduling PDCCH)) and a specific parameter. The specific parameter may be a panel ID or may be a CORESET pool index/TRP ID.

The association between a PUSCH and the specific parameter may be indicated in at least one of scheduling DCI and a configuration of a configured grant (PUSCH).

In the present disclosure, a "PUCCH(s)/PUSCH(s) are associated with the same/different panels" and a "PUSCH(s)/PUCCH(s) are associated with the same/different specific parameters (panel IDs/CORESET pool indices/TRP IDs)" may be interchangeably interpreted.

Each of the embodiments/aspects/options/choices in the present disclosure may be applied to use of at least one of single DCI using multi-TRP and multi-DCI using multi-TRP.

Whether a PUCCH/PUSCH is associated with a single panel or associated with multi-panel may be configured/indicated for a UE by using higher layer signaling (RRC/MAC CE)/physical layer signaling (DCI).

Whether a PUCCH/PUSCH is associated with a single panel or associated with multi-panel may be configured/indicated for a UE depending on whether one or a plurality of (two) TCI states/spatial relations are indicated for the PUCCH/PUSCH.

Whether a PUSCH is associated with a single panel or associated with multi-panel may be configured/indicated for a UE depending on whether one or a plurality of (two) SRIs/TPMIs are indicated for the PUSCH.

Whether a PUSCH is associated with a single panel or associated with multi-panel may be configured for a UE depending on whether one or a plurality of (two) CB (codebook)/NCB (on-codebook) SRS resource sets are configured for the PUSCH.

In the present disclosure, association by a CORESET pool index/TRP ID may mean associating a different TRP with a different panel. In the present disclosure, association for a TRP may mean association with a panel.

Each embodiment/aspect/option/choice in the present disclosure may be inapplicable to a case where multi-DCI using multi-TRP is utilized.

Hereinafter, in each embodiment and each drawing in the present disclosure, a case is described that PUSCHs/PUCCHs overlap with each other in the time domain. The overlap may mean that PUSCH/PUCCH resources completely overlap with each other, may mean that the PUSCH/PUCCH resources overlap at least partially with each other, or may mean that a time resource of a given PUSCH/PUCCH resource is completely included in a time resource of another PUSCH/PUCCH resource.

Hereinafter, in each embodiment of the present disclosure, with respect to the plurality of panels, although a case is described as an example that the number of panels is two, the number of panels may be three or more.

In the present disclosure, support/configuration/activation of simultaneous UL transmission of a PUSCH and a PUCCH using a plurality of panels may mean that a UE transmits the PUCCH using a given panel/beam and transmits the PUSCH using another panel/beam.

In the present disclosure, in a case where a specific timeline condition is satisfied, a UE may multiplex/map UCI in a PUCCH on a PUSCH. The specific timeline condition may be a timeline condition defined in an existing specification (Rel. 15/16/17) or may be a new timeline for a case of multiplexing/mapping UCI of a PUCCH on a PUSCH related to a different panel.

In the present disclosure, resolving, processing, execution, a process, and handling may be interchangeably interpreted. In the present disclosure, "resolving an overlap between a plurality of UL channels" may mean "dropping/canceling/postponing at least one of the plurality of UL channels and transmitting the other UL channel(s)."

A first UL channel (PUSCH/PUCCH) and a second UL channel (PUSCH/PUCCH) may be scheduled in the same time domain.

A UE may judge/control resolving of an overlap between the first UL channel and the second UL channel, based on at least one of whether the first UL channel and the second UL channel have the same priority, whether the first UL channel and the second UL channel are associated with the same panel, whether the first UL channel and the second UL panel correspond to an overlap between a single-panel transmission and a multi-panel transmission, whether the first UL channel and the second UL channel correspond to an overlap between multi-panel transmissions, and whether the first UL channel and the second UL channel are UL channels of the same type.

### <First Embodiment>

In a first embodiment, description will be given of an overlap between a single-panel PUSCH/PUCCH (first PUSCH/PUCCH) and a single-panel PUSCH/PUCCH (second PUSCH/PUCCH).

The UE may perform handling of an overlap between a first PUSCH/PUCCH and a second PUSCH/PUCCH in accordance with a specific process.

The specific process may be defined in a specification in advance.

The UE may judge handling of an overlap between a PUCCH(s)/PUSCH(s), based on at least one of whether the PUCCH(s)/PUSCH(s) have the same priority and whether the PUCCH(s)/PUSCH(s) are associated with the same panel.

The specific process may include, for example, at least one of processes A to L to be described below.

### {Process A}

Resolve an overlap between a PUCCH transmission and a PUCCH transmission having the same priority and associated with the same panel.

### {Process B}

Resolve an overlap between a PUSCH transmission and a PUSCH transmission having the same priority and associated with the same panel.

### {Process C}

Resolve an overlap between a PUCCH transmission and a PUSCH transmission having the same priority and associated with the same panel.

### {Process D}

Resolve an overlap between a PUCCH transmission and a PUCCH transmission having different priorities and associated with the same panel.

### {Process E}

Resolve an overlap between a PUSCH transmission and a PUSCH transmission having different priorities and associated with the same panel.

### {Process F}

Resolve an overlap between a PUCCH transmission and a PUSCH transmission having different priorities and associated with the same panel.

### {Process G}

Resolve an overlap between a PUCCH transmission and a PUCCH transmission having the same priority and associated with different panels.

### {Process H}

Resolve an overlap between a PUSCH transmission and a PUSCH transmission having the same priority and associated with different panels.

### {Process I}

Resolve an overlap between a PUCCH transmission and a PUSCH transmission having the same priority and associated with different panels.

### {Process J}

Resolve an overlap between a PUCCH transmission and a PUCCH transmission having different priorities and associated with different panels.

### {Process K}

Resolve an overlap between a PUSCH transmission and a PUSCH transmission having different priorities and associated with different panels.

### {Process L}

Resolve an overlap between a PUCCH transmission and a PUSCH transmission having different priorities and associated with different panels.

Note that it is to be easily understood by those skilled in the art that processes A to L above do not indicate that handling goes from process A to process L in this order.

At least one of processes A to L above need not be defined.

For example, the UE need not assume/expect that an overlap corresponding to at least one of processes A to L above occurs.

For example, the UE need not assume/expect an overlap between a PUCCH transmission and a PUCCH transmission having the same priority and associated with the same panel. In this case, process A above need not be defined.

For example, the UE need not assume/expect an overlap between a PUSCH transmission and a PUSCH transmission having the same priority and associated with the same panel. In this case, process B above need not be defined.

For example, the UE need not assume/expect an overlap between a PUCCH transmission and a PUSCH transmission having the same priority and associated with the same panel. In this case, process C above need not be defined.

For example, the UE need not assume/expect an overlap between a PUCCH transmission and a PUCCH transmission having different priorities and associated with the same panel. In this case, process D above need not be defined.

For example, the UE need not assume/expect an overlap between a PUSCH transmission and a PUSCH transmission having different priorities and associated with the same panel. In this case, process E above need not be defined.

For example, the UE need not assume/expect an overlap between a PUCCH transmission and a PUSCH transmission having different priorities and associated with the same panel. In this case, process F above need not be defined.

For example, the UE need not assume/expect an overlap between a PUCCH transmission and a PUCCH transmission having the same priority and associated with different panels. In this case, process G above need not be defined.

For example, the UE need not assume/expect an overlap between a PUSCH transmission and a PUSCH transmission having the same priority and associated with different panels. In this case, process H above need not be defined.

For example, the UE need not assume/expect an overlap between a PUCCH transmission and a PUSCH transmission having the same priority and associated with different panels. In this case, process I above need not be defined.

For example, the UE need not assume/expect an overlap between a PUCCH transmission and a PUCCH transmission having different priorities and associated with different panels. In this case, process J above need not be defined.

For example, the UE need not assume/expect an overlap between a PUSCH transmission and a PUSCH transmission having different priorities and associated with different panels. In this case, process K above need not be defined.

For example, the UE need not assume/expect an overlap between a PUCCH transmission and a PUSCH transmission having different priorities and associated with different panels. In this case, process L above need not be defined.

At least two of processes A to L above may be processed in parallel. In other words, at least two of processes A to L above may be judged at the same timing.

In a case where the UE performs a resolving process for an overlap between a PUSCH(s)/PUCCH(s) associated with the same panel (for example, process A/B/C/D/E/F above), an order of processing related to panels may further be defined.

The order of processing related to panels may be an order based on panel IDs, for example. For example, the UE may resolve PUSCH/PUCCH overlaps in an ascending order (or a descending order) of panel IDs. Specifically, the UE may resolve each overlap between a PUSCH(s)/PUCCH(s) related to panel #0 (or #1) and then resolve each overlap between a PUSCH(s)/PUCCH(s) related to panel #1 (or #0).

In a case where the UE performs a resolving process for an overlap between a PUSCH(s)/PUCCH(s) having the same priority (for example, process A/B/C/G/H/I above), an order of processing related to priorities may further be defined.

The order of processing related to panels may be an order based on priorities/priority indices, for example. For example, the UE may resolve the PUSCH/PUCCH overlaps in an ascending order (or a descending order) of priority indices. Specifically, the UE may resolve each overlap between a PUSCH(s)/PUCCH(s) having a higher (or lower) priority index and then resolve each overlap between a PUSCH(s)/PUCCH(s) having a lower (or higher) priority index.

The UE may firstly perform processing for an overlap between a PUSCH(s)/PUCCH(s) associated with the same panel and then perform processing for an overlap between a PUSCH(s)/PUCCH(s) associated with different panels.

For example, the UE may perform processing for the PUSCH/PUCCH overlaps in the order of processes A, B, C, D, E, F, G, H, I, J, K, and L above.

For example, the UE may perform overlap processing in the order of overlap processing related to the same panel and the same priority, overlap processing related to the same panel and different priorities, overlap processing related to different panels and the same priority, and overlap processing related to different panels and different priorities.

In this case, the UE may perform the overlap processing in the order of overlap processing for channels of the same type and overlap processing for channels of different types. For example, the UE may perform overlap processing in the order of overlap processing for a PUCCH and a PUCCH, overlap processing for a PUSCH and a PUSCH, and overlap processing for a PUCCH and a PUSCH.

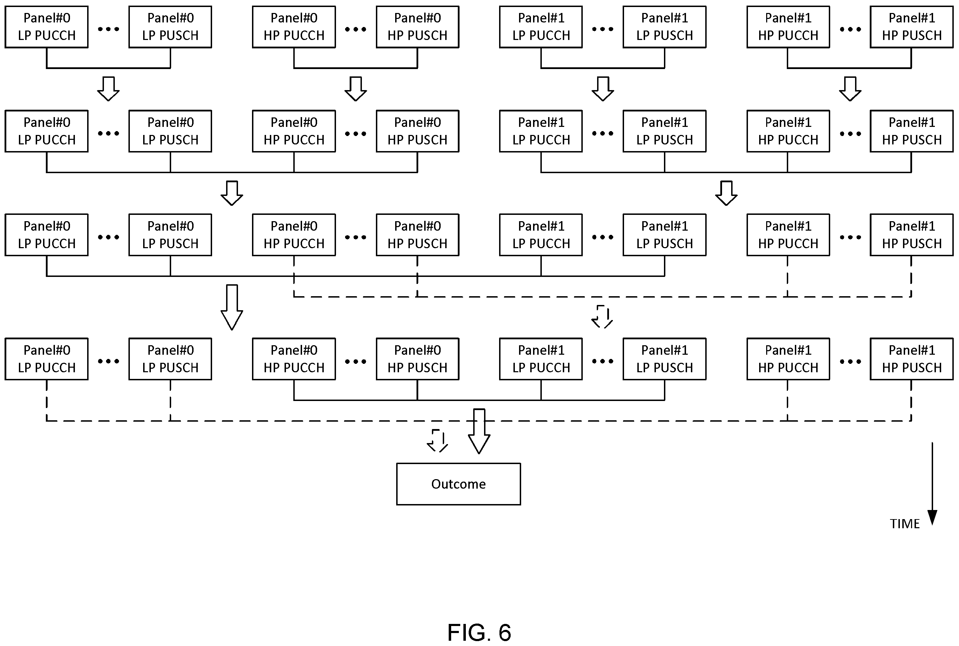

FIG. 6 is a diagram to show an example related to processing of PUCCH/PUSCH overlaps according to the first embodiment. FIG. 6 shows transmissions of PUSCHs and PUCCHs in panels (panel #0 and panel #1). The PUSCHs and the PUCCHs each have a high priority (HP) or a low priority (LP).

In the example shown in FIG. 6, a UE firstly resolves each overlap between a PUSCH(s)/PUCCH(s) having the same priority with the same panel (process A/B/C above). The UE secondly resolves each overlap between a PUSCH(s)/PUCCH(s) having different priorities with the same panel (process D/E/F above). The UE thirdly resolves each overlap between a PUSCH(s)/PUCCH(s) having the same priority with different panels (process G/H/I above). The UE fourthly resolves each overlap between a PUSCH(s)/PUCCH(s) having different priorities with different panels (process J/K/L above).

The UE may firstly perform processing on each overlap between a PUSCH(s)/PUCCH(s) having the same priority and then perform processing on each overlap between a PUSCH(s)/PUCCH(s) having different priorities.

For example, the UE may perform processing on the PUSCH/PUCCH overlaps in the order of processes A, B, C, G, H, I, D, E, F, J, K, and L above.

For example, the UE may perform overlap processing in the order of overlap processing related to the same panel and the same priority, overlap processing related to different panels and the same priority, overlap processing related to the same panel and different priorities, and overlap processing related to different panels and different priorities.

In this case, the UE may perform the overlap processing in the order of overlap processing for channels of the same type and overlap processing for channels of different types. For example, the UE may perform overlap processing in the order of overlap processing for a PUCCH and a PUCCH, overlap processing for a PUSCH and a PUSCH, and overlap processing for a PUCCH and a PUSCH.

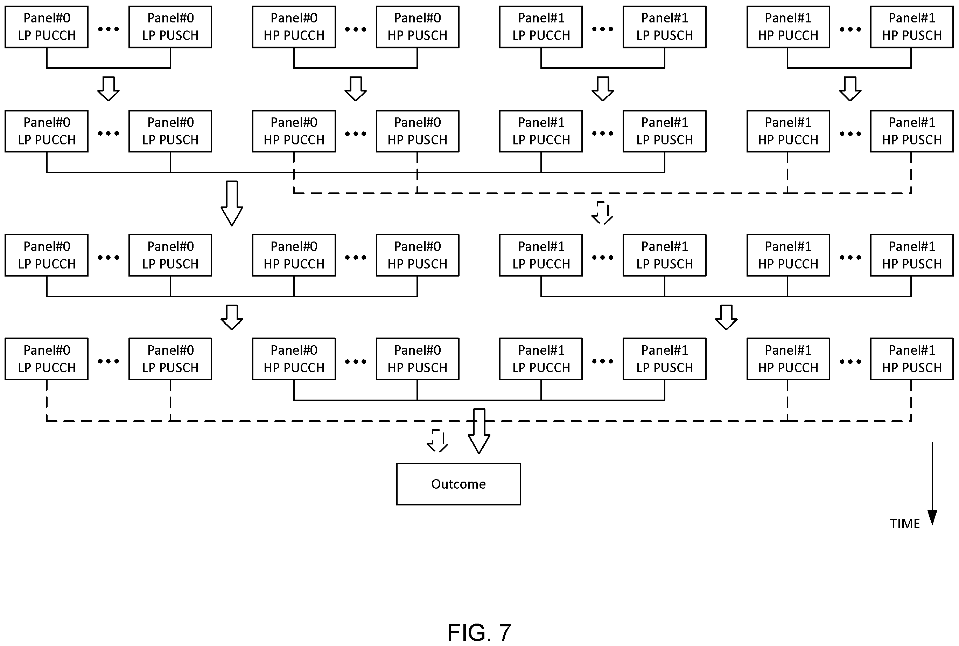

FIG. 7 is a diagram to show another example related to processing of PUCCH/PUSCH overlaps according to the first embodiment. FIG. 7 shows transmissions of PUSCHs and PUCCHs in panels (panel #0 and panel #1). The PUSCHs and the PUCCHs each have a high priority (HP) or a low priority (LP).

In the example shown in FIG. 7, a UE firstly resolves each overlap between a PUSCH(s)/PUCCH(s) having the same priority with the same panel (process A/B/C above). The UE secondly resolves each overlap between a PUSCH(s)/PUCCH(s) having the same priority with different panels (process G/H/I above). The UE thirdly resolves each overlap between a PUSCH(s)/PUCCH(s) having different priorities with the same panel (process D/E/F above). The UE fourthly resolves each overlap between a PUSCH(s)/PUCCH(s) having different priorities with different panels (process J/K/L above).

Note that, although two examples related to the order of processes A to L have been described above, the order of processes A to L is not limited to these. In other words, the order of processes A to L may be any order. In the present disclosure, comprehensive description is omitted for simplicity.

For resolving of an overlap between a PUCCH(s)/PUSCH(s) associated with the same panel and having the same/different priorities, a rule defined in Rel. 17 may be used.

For resolving of an overlap between a PUCCH and a PUCCH associated with different panels and having the same priority, a first specific rule may be used.

For resolving of an overlap between a PUCCH and a PUSCH associated with different panels and having the same priority, a second specific rule may be used.

For resolving of an overlap between a PUCCH(s)/PUSCH(s) associated with different panels and having different priorities, a third specific rule may be used.

The first to third specific rules will be described below.

The first specific rule may be a rule/method described in at least one of options 1 to 6 and 13 below.

The second specific rule may be a rule/method described in at least one of options 7 to 12 and 13 below.

The third specific rule may be a rule/method described in option 13 below.

### <<Option 1>>

When the UE supports PUCCH simultaneous multi-panel transmission, the number of PUCCHs the UE may transmit in one slot in a given CC (cell) may follow at least one of options 1-0 and 1-1 below.

### {Option 1-0}

The UE may transmit up to M PUCCHs (M is a specific integer, for example, two) in one slot in a given CC (cell) over a plurality of (for example, all) panels.

In this case, at least one of a plurality of (for example, two) PUCCHs may be limited to a specific PUCCH format. For example, the specific PUCCH format may be a PUCCH format with a relatively small number of symbols (for example, PUCCH format 0/2, short PUCCH).

Limitation related to this PUCCH format may be applied only when a specific higher layer parameter is not configured to be a specific condition (for example, unless an RRC parameter "ackNackFeedbackMode" = separate).

### {Option 1-1}

The UE may transmit a total of N PUCCHs (N is an integer) in one slot in a given CC (cell).

N above may be an integer greater than 2.

For example, when PUCCH (simultaneous) transmission is performed in two panels, N may be 2 × M (M is a specific integer, for example, 2). For example, when PUCCH (simultaneous) transmission is performed in X panels, N may be X × M.

The UE may transmit, for PUCCHs associated with the same panel, up to two PUCCHs in different symbols in one slot in a given CC (cell).

At least one of two PUCCHs associated with the same panel in one slot may be a specific PUCCH format. For example, the specific PUCCH format may be a PUCCH format with a relatively small number of symbols (for example, PUCCH format 0/2, short PUCCH).

Limitation related to this PUCCH format may be applied, for example, only when multi-DCI using multi-TRP is configured and a specific higher layer parameter is not configured to be a specific condition (for example, unless an RRC parameter "ackNackFeedbackMode" = separate).

### <<Option 2>>

If the UE is configured with a plurality of PUCCH resources for CSI in one slot, and a plurality of (for example, two) PUCCHs for a plurality of (for example, two) CSI reports are associated with the same panel, the UE may follow at least one of choices 2-A-1 to 2-A-3 to be described below.

The UE may multiplex/map, in one PUCCH, a plurality of (for example, two) CSI reports associated with the same panel (choice 2-A-1).

The UE need not multiplex/map, in one PUCCH, a plurality of (for example, two) CSI reports associated with the same panel (choice 2-A-2).

Which of choices 2-A-1 and 2-A-2 above is to be applied may be configured for the UE by using higher layer signaling (RRC/MAC CE) (choice 2-A-3).

In choice 2-A-3, the configuration may be performed for each panel.

If the UE is configured with a plurality of PUCCH resources for CSI in one slot, and a plurality of (for example, two) PUCCHs for a plurality of (for example, two) CSI reports are associated with different panels, the UE may follow at least one of choices 2-B-1 to 2-B-3 to be described below.

The UE may multiplex/map, in one PUCCH, a plurality of (for example, two) CSI reports associated with different panels (choice 2-B-1).

The UE need not multiplex/map, in one PUCCH, a plurality of (for example, two) CSI reports associated with different panels (choice 2-B-2).

Which of choices 2-B-1 and 2-B-2 above is to be applied may be configured for the UE by using higher layer signaling (RRC/MAC CE) (choice 2-B-3).

In choice 2-B-3, the configuration may be performed for each panel/each panel pair.

### {{Aspect 2-1}}

A UE may support simultaneous multi-panel transmission of PUCCHs.

For the UE, a plurality of PUCCH resources for CSI may be configured in one slot.

This aspect may be applied, for example, in a combination of choices 2-A-1 and 2-B-1 above.

The UE may follow operation defined in an existing specification (for example, Rel. 16).

For example, the UE may determine one PUCCH resource, based on an RRC parameter (for example, multi-CSI-PUCCH-ResourceList) related to a plurality of PUCCH resource lists for CSI, in accordance with a specific rule. In the one determined PUCCH resource, the UE may multiplex/map a plurality of (for example, all the) pieces of CSI.

### {{Aspect 2-2}}

A UE may support simultaneous multi-panel transmission of PUCCHs.

For the UE, a plurality of PUCCH resources for CSI may be configured in one slot.

This aspect may be applied, for example, in a combination of choices 2-A-2 and 2-B-2 above.

The UE may follow at least one of options 2-2-0 and 2-2-1 below.

### {Option 2-2-0}

The UE may determine a plurality of (for example, two) PUCCH resources for CSI reports over a plurality of (for example, all the) panels.

The UE may determine a PUCCH resource (first resource) corresponding to a CSI report with a highest priority, from among CSI reports associated with arbitrary panels.

The UE may determine a PUCCH resource (second resource) corresponding to a CSI report with a highest priority, from among CSI reports associated with arbitrary panels, the CSI reports corresponding to remaining resources excluding the first resource.

When the first resource is a first PUCCH format (for example, a relatively short PUCCH format, a short PUCCH, PUCCH format 2), the remaining resources excluding the first resource may be resources not overlapping with the first resource in the slot. In this case, the remaining resources may be associated with arbitrary panels.

When the first resource is a second PUCCH format (relatively long PUCCH format, long PUCCH, PUCCH format 3/4), the remaining resources excluding the first resource may be resources of the first PUCCH format not overlapping with the first resource in the slot. In this case, the remaining resources may be associated with arbitrary panels.

A resource other than the first or second resources above may be dropped.

### {Option 2-2-1}

For each panel, the UE may determine a plurality of (for example, two) PUCCH resources in one slot for CSI reports.

For each panel, the UE may determine a PUCCH resource (first resource) corresponding to a CSI report with a highest priority, from among CSI reports associated with the panels.

For each panel, the UE may determine a PUCCH resource (second resource) corresponding to a CSI report with a highest priority, from among CSI reports associated with the panels, the CSI reports corresponding to remaining resources excluding the first resource.

When the first resource is a first PUCCH format (for example, a relatively short PUCCH format, a short PUCCH, PUCCH format 2), the remaining resources excluding the first resource may be resources not overlapping with the first resource in the slot. In this case, the remaining resources may be associated with the same panel.

When the first resource is a second PUCCH format (relatively long PUCCH format, long PUCCH, PUCCH format 3/4), the remaining resources excluding the first resource may be resources of the first PUCCH format not overlapping with the first resource in the slot. In this case, the remaining resources may be associated with the same panel.

For each panel, a resource other than the first or second resources above may be dropped.

### {{Aspect 2-3}}

A UE may support simultaneous multi-panel transmission of PUCCHs.

For the UE, a plurality of PUCCH resources for CSI may be configured in one slot.

This aspect may be applied, for example, in a combination of choices 2-A-1 and 2-B-2 above.

For each panel, the UE may multiplex/map, in one resource, a plurality of (for example, all the) CSI reports associated with the same panel.

For each panel, the one resource may be determined, based on an RRC parameter (for example, multi-CSI-PUCCH-ResourceList) related to a PUCCH resource list for CSI associated with the panels, in accordance with a specific rule. In this case, the UE may follow at least one of variations 2-3-1 and 2-3-2 below.

### (Variation 2-3-1)

A list for one resource may be configured for the UE. The list for one resource may include a resource over a plurality of (for example, all the) panels. For each panel, the one resource may be determined from resources associated with the panels in the list.

### (Variation 2-3-2)

For each panel, a list for one resource may be configured for the UE. For each panel, the one resource may be determined from a resource list associated with a panel.

In Aspect 2-3, the UE may simultaneously transmit a plurality of (for example, two) PUCCH resources associated with a plurality of (for example, two) panels. Each resource of the plurality of PUCCH resources may include one or more pieces of CSI associated with the same panel.

### <<Option 3>>

This option may be applied, for example, when multi-DCI using multi-TRP is configured for the UE and a specific higher layer parameter is configured to be a specific condition (for example, when an RRC parameter "ackNackFeedbackMode" = separate).

For a plurality of PUCCH resources including HARQ-ACK information indicated in the same slot, the UE may multiplex/map HARQ-ACK information associated with the same CORESET pool index (coresetPoolIndex), for each CORESET pool index, in one PUCCH resource.

The UE may multiplex/map, in different PUCCH resources, respective different pieces of HARQ-ACK information corresponding to different CORESET pool indices.

Based on whether PUCCH resources (plurality of PUCCH resources) corresponding to each of a plurality of pieces of HARQ-ACK information indicated in the same slot are associated with the same CORESET pool index, the UE may assume whether the PUCCH resources overlap with each other in a time domain.

The UE may follow at least one of options 3-0 and 3-1 below.

### {Option 3-0}

The UE need not expect/assume that a plurality of (for example, two) PUCCH resources overlap with each other (in the time domain), regardless of whether a plurality of (for example, two) PUCCH resources associated with different CORESET pool indices (coresetPoolIndex) are associated with the same panel or different panels.

### {Option 3-1}

If PUCCH resources (plurality of PUCCH resources) corresponding to a plurality of (for example, two) respective CORESET pool indices are associated with the same panel, the UE need not expect/assume that the plurality of PUCCH resources overlap with each other (in the time domain).

If PUCCH resources (plurality of PUCCH resources) corresponding to a plurality of (for example, two) respective CORESET pool indices are associated with respective different panels, the UE may follow at least one of choices 3-1-1 to 3-1-3 below.

### {{Choice 3-1-1}}

The UE need not expect/assume that the PUCCH resources (plurality of PUCCH resources) associated with different panels overlap with each other (in the time domain).

### {{Choice 3-1-2}}

The UE may expect/assume that the PUCCH resources (plurality of PUCCH resources) associated with different panels overlap with each other (in the time domain). In this case, the UE may simultaneously transmit the plurality of PUCCH resources (overlapping with each other in the time domain).

### {{Choice 3-1-3}}

Which of choices 3-1-1 and 3-1-2 above is to be applied may be configured for the UE by using higher layer signaling (RRC/MAC CE).

### <<Option 4>>

### {{Aspect 4-1}}

When a PUCCH resource including a positive SR and a PUCCH resource using a specific PUCCH format (for example, PUCCH format 0) including an HARQ-ACK overlap with each other (in a time domain), the UE may follow at least one of options 4-1-0 and 4-1-1 below.

### {Option 4-1-0}

Regardless of whether the PUCCH resource for the SR and the PUCCH resource for the HARQ-ACK are associated with the same panel or different panels, the UE may multiplex/map and transmit the SR and the HARQ-ACK in the PUCCH resource for the HARQ-ACK.

### {Option 4-1-1}

When the PUCCH resource for the SR and the PUCCH resource for the HARQ-ACK are associated with the same panel, the UE may multiplex/map and transmit the SR and the HARQ-ACK in the PUCCH resource for the HARQ-ACK.

When the PUCCH resource for the SR and the PUCCH resource for the HARQ-ACK are associated with different panels, the UE may follow at least one of choices 4-1-1-1 to 4-1-1-3 below.

The UE may multiplex/map and transmit the SR and the HARQ-ACK in the PUCCH resource for the HARQ-ACK (choice 4-1-1-1).

The UE need not multiplex/map the SR and the HARQ-ACK in the same resource (choice 4-1-1-2). In this case, the UE may transmit the SR and the HARQ-ACK in the PUCCH resource for the SR and the PUCCH resource for the HARQ-ACK, respectively.

Which of choices 4-1-1-1 and 4-1-1-2 above is to be applied may be configured for the UE by using higher layer signaling (RRC/MAC CE) (choice 4-1-1-3).

### {{Aspect 4-2}}

When a PUCCH resource including an SR and a PUCCH resource using a specific PUCCH format (for example, PUCCH format 2/3/4) including an HARQ-ACK overlap with each other (in a time domain), the UE may follow at least one of options 4-1-0 and 4-1-1 above.

### {{Aspect 4-3}}

When a PUCCH resource using a first PUCCH format (for example, PUCCH format 0) including an SR and a PUCCH resource using a second PUCCH format (for example, PUCCH format 1) including an HARQ-ACK overlap with each other (in a time domain), the UE may follow at least one of options 4-3-0 and 4-3-1 below.

### {Option 4-3-0}

Regardless of whether the PUCCH resource for the SR and the PUCCH resource for the HARQ-ACK are associated with the same panel or different panels, the UE may drop the SR, and may transmit the HARQ-ACK (only the HARQ-ACK) in the PUCCH resource for the HARQ-ACK.

### {Option 4-3-1}

When the PUCCH resource for the SR and the PUCCH resource for the HARQ-ACK are associated with the same panel, the UE may drop the SR, and may transmit the HARQ-ACK (only the HARQ-ACK) in the PUCCH resource for the HARQ-ACK.

When the PUCCH resource for the SR and the PUCCH resource for the HARQ-ACK are associated with different panels, the UE may follow at least one of choices 4-3-1-1 to 4-3-1-3 below.

The UE may drop the SR, and may transmit the HARQ-ACK (only the HARQ-ACK) in the PUCCH resource for the HARQ-ACK (choice 4-3-1-1).

The UE may transmit the SR and the HARQ-ACK in the PUCCH resource for the SR and the PUCCH resource for the HARQ-ACK, respectively (choice 4-3-1-2).

Which of choices 4-3-1-1 and 4-3-1-2 above is to be applied may be configured for the UE by using higher layer signaling (RRC/MAC CE) (choice 4-3-1-3).

### {{Aspect 4-4}}

When a PUCCH resource using a specific PUCCH format (for example, PUCCH format 1) including a positive SR and a PUCCH resource using a specific PUCCH format (for example, PUCCH format 1) including an HARQ-ACK overlap with each other (in a time domain), the UE may follow at least one of options 4-4-0 and 4-4-1 below.

### {Option 4-4-0}

Regardless of whether the PUCCH resource for the SR and the PUCCH resource for the HARQ-ACK are associated with the same panel or different panels, the UE may transmit the HARQ-ACK in the PUCCH resource for the SR.

### {Option 4-4-1}

When the PUCCH resource for the SR and the PUCCH resource for the HARQ-ACK are associated with the same panel, the UE may transmit the HARQ-ACK in the PUCCH resource for the SR.

When the PUCCH resource for the SR and the PUCCH resource for the HARQ-ACK are associated with different panels, the UE may follow at least one of choices 4-4-1-1 to 4-4-1-3 below.

The UE may transmit the HARQ-ACK in the PUCCH resource for the SR (choice 4-4-1-1).

The UE, in this case, the UE may transmit the SR and the HARQ-ACK in the PUCCH resource for the SR and the PUCCH resource for the HARQ-ACK, respectively (choice 4-4-1-2).

Which of choices 4-4-1-1 and 4-4-1-2 above is to be applied may be configured for the UE by using higher layer signaling (RRC/MAC CE) (choice 4-4-1-3).

### <<Option 5>>

When a PUCCH resource using a specific PUCCH format including an SR and a PUCCH resource using a specific PUCCH format (for example, PUCCH format 2/3/4) including CSI overlap with each other (in a time domain), the UE may follow at least one of options 5-0 and 5-1 below.

### {Option 5-0}

Regardless of whether the PUCCH resource for the SR and the PUCCH resource for the CSI are associated with the same panel or different panels, the UE may multiplex/map and transmit the SR and the CSI in the resource for the CSI.

### {Option 5-1}

Based on whether the PUCCH resource for the SR and the PUCCH resource for the CSI are associated with the same panel, the UE may judge mapping of at least one of the SR and the CSI.

When the PUCCH resource for the SR and the PUCCH resource for the CSI are associated with the same panel, the UE may multiplex/map and transmit the SR and the CSI in the resource for the CSI.

When the PUCCH resource for the SR and the PUCCH resource for the HARQ-ACK are associated with different panels, the UE may follow at least one of choices 5-1-1 to 5-1-3 below.

The UE may multiplex/map and transmit the SR and the CSI in the resource for the CSI (choice 5-1-1).

The UE need not multiplex/map the SR and the CSI in the same resource (choice 5-1-2). In this case, the UE may transmit the CSI and the SR in the PUCCH resource for the CSI and the PUCCH resource for the SR, respectively.

Which of choices 5-1-1 and 5-1-2 above is to be applied may be configured for the UE by using higher layer signaling (RRC/MAC CE) (choice 5-1-3).

### <<Option 6>>

### {{Aspect 6-1}}

Aspect 6-1 describes a case where a PUCCH resource including CSI overlaps with a PUCCH resource including an HARQ-ACK and where a PUCCH resource for the HARQ-ACK and a PUCCH resource for the CSI are associated with the same panel.

In Aspect 6-1, the UE may follow at least one of choices 6-1-1 to 6-1-3 below.

The UE may multiplex/map and transmit the CSI and the HARQ-ACK in one PUCCH resource (choice 6-1-1).

The UE need not multiplex/map the CSI and the HARQ-ACK in the same resource (choice 6-1-2). In this case, the UE may drop a CSI report, and may transmit the HARQ-ACK in one PUCCH resource.

Which of choices 6-1-1 and 6-1-2 above is to be applied may be configured for the UE by using higher layer signaling (RRC/MAC CE) (choice 6-1-3).

### {{Aspect 6-2}}

Aspect 6-2 describes a case where a PUCCH resource including CSI overlaps with a PUCCH resource including an HARQ-ACK and where a PUCCH resource for the SR and a PUCCH resource for the CSI are associated with different panels.

In Aspect 6-2, the UE may follow at least one of choices 6-2-1 to 6-2-3 below.

The UE may multiplex/map and transmit the CSI and the HARQ-ACK in one PUCCH resource (choice 6-2-1).

The UE need not multiplex/map the CSI and the HARQ-ACK in the same resource (choice 6-2-2). In this case, the UE may transmit the CSI and the HARQ-ACK in the PUCCH resource for the CSI and the PUCCH resource for the HARQ-ACK, respectively.

Which of choices 6-2-1 and 6-2-2 above is to be applied may be configured for the UE by using higher layer signaling (RRC/MAC CE) (choice 6-2-3).

Choices 6-1-1/6-1-2/6-1-3/6-2-1/6-2-2/6-2-3 above may be applied in combination.

In option 6, when multiplexing/mapping between CSI and an HARQ-ACK is performed in one PUCCH resource, and a PUCCH resource for the CSI and a PUCCH resource for the HARQ-ACK indicated by using DCI overlap with each other, the UE may multiplex/map and transmit the CSI and the HARQ-ACK in the PUCCH resource indicated by the DCI.

The DCI may be, for example, DCI for scheduling a PDSCH (scheduling DCI).

In option 6, when multiplexing/mapping between CSI and an HARQ-ACK is performed in one PUCCH resource, and a PUCCH resource for the CSI and a PUCCH resource for the HARQ-ACK not indicated by using DCI overlap with each other, the UE may multiplex/map and transmit the CSI and the HARQ-ACK in the PUCCH resource for the CSI.

For example, the HARQ-ACK may be an HARQ-ACK not corresponding to scheduling DCI, or may be an HARQ-ACK corresponding to a semi-persistent scheduling (SPS) PDSCH.

### <<Option 7>>

When a given PUSCH/PUCCH and another PUSCH/PUCCH are associated with the same panel, the UE need not expect/assume that a PUSCH/PUCCH scheduled/triggered by DCI corresponding to a CORESET pool index of a first value (for example, "0") overlaps (in the time domain) with a PUSCH/PUCCH scheduled/triggered by DCI corresponding to a CORESET pool index of a second value (for example, "1").

When a given PUSCH/PUCCH and another PUSCH/PUCCH are associated with the same panel, the UE may follow at least one of choices 7-1 to 7-3 below.

The UE need not expect/assume that the PUSCH/PUCCH scheduled/triggered by the DCI corresponding to the CORESET pool index of the first value (for example, "0") overlaps (in the time domain) with the PUSCH/PUCCH scheduled/triggered by the DCI corresponding to the CORESET pool index of the second value (for example, "1") (choice 7-1).

The UE may expect/assume that the PUSCH/PUCCH scheduled/triggered by the DCI corresponding to the CORESET pool index of the first value (for example, "0") overlaps (in the time domain) with the PUSCH/PUCCH scheduled/triggered by the DCI corresponding to the CORESET pool index of the second value (for example, "1") (choice 7-2). In this case, the UE may simultaneously transmit the PUSCH/PUCCH corresponding to the CORESET pool index of the first value and the PUSCH/PUCCH corresponding to the CORESET pool index of the second value (in a manner of overlapping in the time domain).

Which of choices 1-1 and 1-2 described above is to be applied may be configured for the UE by using higher layer signaling (RRC/MAC CE) (choice 7-3).

Note that this option may be applied not only to an overlap between a PUSCH and PUCCH but also to an overlap between a PUSCH and PUSCH and an overlap between a PUCCH and PUCCH.

### <<Option 8>>

The UE may judge the PUSCH/PUCCH transmission, based on whether the PUSCH/PUCCH described above are associated with the same panel or associated with different panels.

In a case where the PUSCH and the PUCCH are associated with the same panel, the UE may drop transmission of the PUSCH.

In a case where the PUSCH and the PUCCH are associated with different panels, the UE may follow at least one of choices 8-1 to 8-3 below.

The UE need not transmit the PUSCH (choice 8-1). The UE may judge not to transmit the PUSCH.

The UE may transmit the PUSCH using a given panel and transmit the PUCCH using another panel (choice 8-2).

Which of choices 8-1 and 8-2 described above is to be applied may be configured for the UE by using higher layer signaling (RRC/MAC CE) (choice 8-3).

### <<Option 9>>

A PUSCH including CSI (for example, AP/SP-CSI) and a PUCCH including UCI (HARQ-ACK/SR/CSI) may be configured overlapping with each other (in the time domain).

The UE may judge the PUSCH/PUCCH (UCI) transmission, based on whether the PUSCH/PUCCH are associated with the same panel or associated with different panels.

In a case where the PUSCH and the PUCCH are associated with the same panel, the UE may multiplex/map (if UCI of the PUCCH includes an HARQ-ACK) the HARQ-ACK on the PUSCH and may not transmit the PUCCH (or may drop the PUCCH).

In a case where the PUSCH and the PUCCH are associated with different panels, the UE may follow at least one of choices 9-1 to 9-4 below.

The UE may multiplex/map (if UCI of the PUCCH includes an HARQ-ACK) the HARQ-ACK on the PUSCH and may not transmit the PUCCH (choice 9-1).

The UE may multiplex/map (if UCI of the PUCCH includes an HARQ-ACK) the HARQ-ACK on the PUSCH and map the UCI except the HARQ-ACK on the PUCCH. The UE may transmit the PUSCH by using a given panel and transmit the PUCCH by using another panel (choice 9-2).

The UE need not multiplex/map (even if UCI of the PUCCH includes an HARQ-ACK) the HARQ-ACK on the PUSCH. The UE may transmit the PUSCH by using a given panel and transmit the PUCCH by using another panel (choice 9-3).

Which of choices 9-1 to 9-3 described above is to be applied may be configured for the UE by using higher layer signaling (RRC/MAC CE) (choice 9-4).

Note that, in this option, when a PUSCH and a PUCCH are associated with the same panel, the UE may judge to perform the PUSCH/PUCCH transmission in accordance with existing operation (defined in Rel. 15/16/17 or earlier versions). When the PUSCH and the PUCCH are associated with different panels, the UE may judge to transmit the PUSCH with a given panel and transmit the PUCCH with another panel.

### <<Option 10>>

A PUSCH including no CSI (for example, AP/SP-CSI) and a PUCCH including UCI (HARQ-ACK/SR/CSI) may be configured overlapping with each other (in the time domain).

The UE may judge the PUSCH/PUCCH (UCI) transmission, based on whether the PUSCH/PUCCH are associated with the same panel or associated with different panels.

In a case where the PUSCH and the PUCCH are associated with the same panel, the UE may multiplex/map (if UCI of the PUCCH includes an HARQ-ACK/CSI) at least one of the HARQ-ACK and the CSI on the PUSCH and may not transmit the PUCCH (or may drop the PUCCH).

In a case where the PUSCH and the PUCCH are associated with different panels, the UE may follow at least one of choices 10-1 to 10-6 below.

The UE may multiplex/map (if UCI of the PUCCH includes an HARQ-ACK/CSI) the HARQ-ACK/CSI on the PUSCH and may not transmit the PUCCH (choice 10-1).

The UE may multiplex/map (if UCI of the PUCCH includes an HARQ-ACK/CSI) the HARQ-ACK/CSI on the PUSCH, and map the UCI except the HARQ-ACK/CSI, on the PUCCH. The UE may transmit the PUSCH by using a given panel and transmit the PUCCH by using another panel (choice 10-2).

The UE may multiplex/map (if UCI of the PUCCH includes an HARQ-ACK) the HARQ-ACK on the PUSCH and map the UCI except the HARQ-ACK on the PUCCH. The UE may transmit the PUSCH by using a given panel and transmit the PUCCH by using another panel (choice 10-3).

The UE may multiplex/map (if UCI of the PUCCH includes CSI) the CSI on the PUSCH, and map the UCI except the CSI, on the PUCCH. The UE may transmit the PUSCH by using a given panel and transmit the PUCCH by using another panel (choice 10-4).

The UE need not multiplex/map (even if UCI of the PUCCH includes an HARQ-ACK/CSI) the HARQ-ACK/CSI on the PUSCH. The UE may transmit the PUSCH by using a given panel and transmit the PUCCH by using another panel (choice 10-5).

Which of choices 10-1 to 10-5 described above is to be applied may be configured for the UE by using higher layer signaling (RRC/MAC CE) (choice 10-6).

### <<Option 11>>

A plurality of (for example, two) CSI reports may be configured overlapping with each other (in the time domain). The plurality of CSI reports may have respective values (for example, y in a function (for example, Pr_{iiCSI}(y, k, c, s)) that provides the priority value) related to different priorities.

This option may be applied to cases except a case that a first CSI report overlaps with a second CSI report, that the first CSI report corresponds to y of a specific first value (for example, 2), and that the second CSI report corresponds to y of a specific second value (for example, 3).

y above may be a value based on at least one of a CSI report type (A-CSI report, SP-CSI report, or P-CSI report) and a channel for the CSI report to be transmitted on.

For example, y for a PUSCH of AP-CSI may be a first value (for example, 0), y for a PUSCH of SP-CSI may be a second value (for example, 1), y for a PUCCH of SP-CSI may be a third value (for example, 2), and y for a PUCCH of P-CSI may be a fourth value (for example, 3).

The UE may judge transmission of the plurality of pieces of CSI, based on whether the plurality of pieces of CSI are associated with the same panel or associated with different panels.

In a case where the plurality of pieces of CSI are associated with the same panel, the UE need not transmit a CSI report with a low priority.

The priority may be determined based on a function (for example, Pr_{iiCSI}(y, k, c, s)) that provides the priority value. A higher priority may correspond to a lower value of Pr_{iiCSI} (y, k, c, s).

In a case where the plurality of pieces of CSI are associated with different panels, the UE may follow at least one of choices 11-1 to 11-3 below.

The UE need not transmit a CSI report with a low priority (choice 11-1).

The UE may transmit a given CSI report by using a given panel and transmit another CSI report by using another panel (choice 11-2).

Which of choices 11-1 and 11-2 described above is to be applied may be configured for the UE by using higher layer signaling (RRC/MAC CE) (choice 11-3).

### <<Option 12>>

A PUCCH and a plurality of PUSCHs may be configured overlapping with each other (in the time domain). The plurality of PUSCHs may be PUSCHs that meet a condition for multiplexing/mapping of UCI.

The UE may judge the PUSCH/PUCCH (UCI) transmission, based on whether the PUCCH/plurality of PUSCHs are associated with the same panel or associated with different panels.

In a case where the PUCCH (including UCI) and the plurality of PUSCHs are associated with the same panel, the UE may select/determine a specific PUSCH from among the plurality of PUSCHs, based on a specific rule. The specific rule may lead to a PUSCH in a restriction defined in Rel. 16/17 described above. The UE may multiplex/map the UCI on the selected/determined PUSCH.

In a case where the plurality of PUSCHs are associated with the same panel and the PUCCH (including UCI) is associated with a panel different from that of the plurality of PUSCHs, the UE may select/determine a specific PUSCH from among the plurality of PUSCHs based on a specific rule. The specific rule may lead to a PUSCH in a restriction defined in Rel. 16/17 described above. The UE may multiplex/map the UCI on the selected/determined PUSCH.

In a case where the plurality of PUSCHs are associated with different panels, the UE may select/determine a specific PUSCH from among the plurality of PUSCHs, based on a specific rule. The UE may multiplex/map the UCI on the selected/determined PUSCH.

The specific rule may be at least one of choices 12-1 to 12-5 below.

### {Choice 12-1}

First, the UE may perform, for the plurality of PUSCHs, selection/determination (first selection/determination) based on an ID related to a panel.

For example, the UE may select/determine a PUSCH corresponding to an ID (panel ID) related to a specific panel or a PUSCH associated with a panel same as that for a PUCCH corresponding to a specific priority.

The ID related to the specific panel may be a lower (or higher) panel ID.

The PUCCH corresponding to the specific priority may be a PUCCH corresponding to a higher (or lower) priority.

For the PUSCH based on the first selection/determination, in a case where there are a plurality of PUSCHs (in other words, in a case where there are the PUSCHs associated with the same panel), the UE may apply, to the PUSCHs, the rule in Rel. 16/17 described above (for example, the UE may firstly perform selection/determination based on PUSCH types, secondly perform selection/determination based on serving cell indices, and thirdly perform selection/determination related to time resources for the PUSCHs).

### {Choice 12-2}

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on the priority.

Next, in a case where there are a plurality of PUSCHs based on the first selection/determination, the UE may perform, for the PUSCHs based on the first selection/determination, selection/determination (second selection/determination) based on an ID related to a panel.

For example, in the case where there are a plurality of PUSCHs based on the first selection/determination, the UE may select/determine, from among the selected/determined PUSCHs, a PUSCH corresponding to an ID (panel ID) related to a specific panel or a PUSCH associated with a panel the same as that for a PUCCH corresponding to a specific priority.

The ID related to the specific panel may be a lower (or higher) panel ID.

The PUCCH corresponding to the specific priority may be a PUCCH corresponding to a higher (or lower) priority.

Furthermore, in a case where there are a plurality of PUSCHs based on the second selection/determination (in other words, in a case where there are PUSCHs associated with the same panel), the UE may perform selection/determination (third selection/determination) based on a serving cell index (ServCellIndex) corresponding to a PUSCH.

For example, in the case where there are a plurality of PUSCHs based on the second selection/determination, the UE may select/determine, from among the selected/determined PUSCHs, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on the priority.

Furthermore, in a case where there are a plurality of PUSCHs based on the third selection/determination, the UE may select/determine, from among the plurality of PUSCHs, a PUSCH earliest (or latest) in time (fourth selection/determination). For example, a priority for a PUSCH earlier in time may be defined higher (or lower) than a priority for a PUSCH later in time.

### {Choice 12-3}

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on the priority.

Next, in a case where there are a plurality of PUSCHs based on the first selection/determination, the UE may perform selection/determination (second selection/determination) based on a serving cell index (ServCellIndex) corresponding to a PUSCH.

For example, in the case where there are a plurality of PUSCHs based on the first selection/determination, the UE may select/determine, from among the selected/determined PUSCHs, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on the priority.

Furthermore, in a case where there are a plurality of PUSCHs based on the second selection/determination (in other words, in a case where there are a plurality of PUSCHs corresponding to the same serving cell index), the UE may perform, for the PUSCHs based on the second selection/determination, selection/determination (third selection/determination) based on an ID related to a panel.

For example, in the case where there are a plurality of PUSCHs based on the second selection/determination, the UE may select/determine, from among the selected/determined PUSCHs, a PUSCH corresponding to an ID (panel ID) related to a specific panel or a PUSCH associated with a panel the same as that for a PUCCH corresponding to a specific priority.

The ID related to the specific panel may be a lower (or higher) panel ID.

The PUCCH corresponding to the specific priority may be a PUCCH corresponding to a higher (or lower) priority.

Furthermore, in a case where there are a plurality of PUSCHs based on the third selection/determination, the UE may select/determine, from among the plurality of PUSCHs, a PUSCH earliest (or latest) in time (fourth selection/determination). For example, a priority for a PUSCH earlier in time may be defined higher (or lower) than a priority for a PUSCH later in time.

### {Choice 12-4}

First, the UE may perform, for the plurality of PUSCHs, selection/determination (first selection/determination) based on a PUSCH type.

For example, a priority based on whether the plurality of PUSCHs are PUSCHs scheduled by DCI or configured grant PUSCHs may be applied to the plurality of PUSCHs. For example, a priority for a PUSCH scheduled by DCI may be defined higher (or lower) than a priority for a configured grant PUSCH. The UE may perform PUSCH selection/determination based on the priority.

Next, in a case where there are a plurality of PUSCHs based on the first selection/determination, the UE may perform selection/determination (second selection/determination) based on a serving cell index (ServCellIndex) corresponding to a PUSCH.

For example, in the case where there are a plurality of PUSCHs based on the first selection/determination, the UE may select/determine, from among the selected/determined PUSCHs, a PUSCH corresponding to a specific serving cell index (ServCellIndex). For example, a priority for a PUSCH with a smaller serving cell index (ServCellIndex) may be defined higher (or lower) than that for a PUSCH with a greater serving cell index (ServCellIndex). The UE may perform PUSCH selection/determination based on the priority.

Furthermore, in a case where there are a plurality of PUSCHs based on the second selection/determination, the UE may select/determine, from among the plurality of PUSCHs, a PUSCH earliest (or latest) in time (third selection/determination). For example, a priority for a PUSCH earlier in time may be defined higher (or lower) than a priority for a PUSCH later in time.

Furthermore, in a case where there are a plurality of PUSCHs based on the third selection/determination (in other words, in a case where there are PUSCHs overlapping with each other in the same time domain after the first to third selections/determinations), the UE may perform, for the PUSCHs based on the third selection/determination, selection/determination (fourth selection/determination) based on an ID related to a panel.

For example, in a case where there are a plurality of PUSCHs based on the third selection/determination, the UE may select/determine, from among the selected/determined PUSCHs, a PUSCH corresponding to an ID (panel ID) related to a specific panel or a PUSCH associated with a panel the same as that for a PUCCH corresponding to a specific priority.

The ID related to the specific panel may be a lower (or higher) panel ID.

The PUCCH corresponding to the specific priority may be a PUCCH corresponding to a higher (or lower) priority.

### {Choice 12-5}

The UE may apply, to PUSCHs corresponding to respective panels, the rule in Rel. 16/17 described above (for example, the UE may firstly perform selection/determination based on a PUSCH type, secondly perform selection/determination based on a serving cell index, and thirdly perform selection/determination related to a time resource for the PUSCHs) for PUSCH selection/determination.

The UE may multiplex/map, using a plurality of panels, UCI on the plurality of PUSCHs.

### <<Option 13>>

In option 13, a case where a first UL channel (for example, a PUCCH) and a second UL channel (for example, a PUSCH) overlap with each other in terms of time will be described. Note that the first UL channel may be a UL signal/channel other than a PUCCH, and the second UL channel may be a UL signal/channel other than a PUSCH.

The UE may perform multi-beam/panel simultaneous UL transmission for a PUSCH and a PUCCH.

A PUSCH of this option may be interchangeably interpreted as a PUCCH as appropriate. In other words, this option may be applied to a case where PUCCHs overlap each other in terms of time.

### {Option 13-1}

When a PUCCH and a PUSCH overlap each other in terms of time, the UE need not perform simultaneous transmission of the PUSCH and the PUCCH.

When a PUCCH and a PUSCH overlap each other in terms of time, the UE may perform dropping/multiplexing (mapping) and thereafter transmit one channel of the PUCCH and the PUSCH, as in an existing specification.

At least one of dropping/multiplexing (mapping) and determination/selection of one channel may be based on at least one of the kinds of channels (for example, a PUSCH or a PUCCH), the contents/types of channels (data/UCI/HARQ-ACK/CSI/SR), the transmission timing/periodicity types of contents of channels (P/AP/SP), and the priorities of channels.

### {Option 13-2}

When a PUCCH and a PUSCH overlap each other in terms of time, the UE may perform simultaneous transmission of the PUSCH and the PUCCH.

For the UE, association between a PUSCH/PUCCH (or a beam/TCI state/spatial relation of the PUSCH/PUCCH) and a panel may be configured.

The UE need not simultaneously transmit a plurality of channels in each of a plurality of panels (one panel of the plurality of panels). In other words, the UE may transmit one channel on each of the plurality of channels to thereby transmit the plurality of channels by using the plurality of respective panels.

When a PUCCH and a PUSCH are associated with the same panel, the UE may perform dropping/multiplexing (mapping) and thereafter transmit one channel of the PUCCH and the PUSCH in each panel, as in an existing specification (as in option 13-1 above).

After the dropping/multiplexing (mapping) is performed in each panel, the PUSCH and the PUCCH are associated with different panels. If the PUSCH and the PUCCH overlap each other in terms of time, the UE may transmit both the PUSCH and the PUCCH.

### {Option 13-3}

When a PUSCH and a PUCCH are associated with different panels, a specific restriction (condition) for simultaneous transmission of the PUSCH and the PUCCH may be defined.

When the specific restriction is satisfied/not satisfied, and the PUCCH and the PUSCH overlap each other in terms of time, the UE may perform dropping/multiplexing (mapping) and thereafter transmit one channel of the PUCCH and the PUSCH, as in an existing specification (as in option 13-1 above).

The specific restriction may be at least one of restrictions to be described in options 13-3-1 to 13-3-4 below.

The specific restriction may be a restriction related to the type of UCI (option 13-3-1). The UE may control multi-panel PUSCH and PUCCH simultaneous transmission, based on the type of UCI to be transmitted (carried) in a PUCCH/PUSCH.

For example, when the PUCCH carries (is configured to carry) an HARQ-ACK/SR, the UE may perform control to perform simultaneous transmission of the PUCCH and the PUSCH. Otherwise, the UE need not perform simultaneous transmission of the PUCCH and the PUSCH. When the UE does not perform simultaneous transmission of the PUCCH and the PUSCH, the UE may drop the PUCCH or may multiplex (map) information to be carried on the PUCCH, on the PUSCH to transmit only the PUSCH.

The specific restriction may be a restriction related to transmission power of UL transmission (option 13-3-2). The UE may control multi-panel PUSCH and PUCCH simultaneous transmission, based on whether a restriction on transmission power of simultaneous transmission is present.

For example, when transmission power of UL transmission is not restricted, the UE may perform control to perform simultaneous transmission of a PUCCH and a PUSCH. When transmission power of UL transmission is restricted, the UE need not perform simultaneous transmission of the PUCCH and the PUSCH. When the UE does not perform simultaneous transmission of the PUCCH and the PUSCH, the UE may drop the PUCCH or may multiplex (map) information to be carried on the PUCCH, on the PUSCH to transmit only the PUSCH. Alternatively, when transmission power of UL transmission is restricted, transmission power of a PUCCH/PUSCH may be reduced (power-scaled).

The specific restriction may be a restriction related to whether a PUSCH carries UCI of a specific type from the same panel (option 13-3-3). The UE may control multi-panel PUSCH and PUCCH simultaneous transmission, based on whether UCI of the specific type from the same panel is transmitted by using the PUSCH.

For example, when the PUSCH does not include an HARQ-ACK/CSI configured/indicated in the same panel, the UE need not perform simultaneous transmission of the PUCCH and the PUSCH. Otherwise, the UE may perform control to perform simultaneous transmission of the PUCCH and the PUSCH. When the UE does not perform simultaneous transmission of the PUCCH and the PUSCH, the UE may drop the PUCCH or may multiplex (map) information to be carried on the PUCCH, on the PUSCH to transmit only the PUSCH.

The specific restriction may be a restriction related to a beam (TCI state/spatial relation) of a PUSCH/PUCCH (option 13-3-4). The UE may control multi-panel PUSCH and PUCCH simultaneous transmission, based on a beam of a PUSCH/PUCCH.

For example, when the beam of the PUSCH and the beam of the PUCCH are beams simultaneously transmittable based on a configuration, the UE may perform control to perform simultaneous transmission of the PUCCH and the PUSCH. Otherwise, the UE need not perform simultaneous transmission of the PUCCH and the PUSCH. When the UE does not perform simultaneous transmission of the PUCCH and the PUSCH, the UE may drop the PUCCH or may multiplex (map) information to be carried on the PUCCH, on the PUSCH to transmit only the PUSCH.

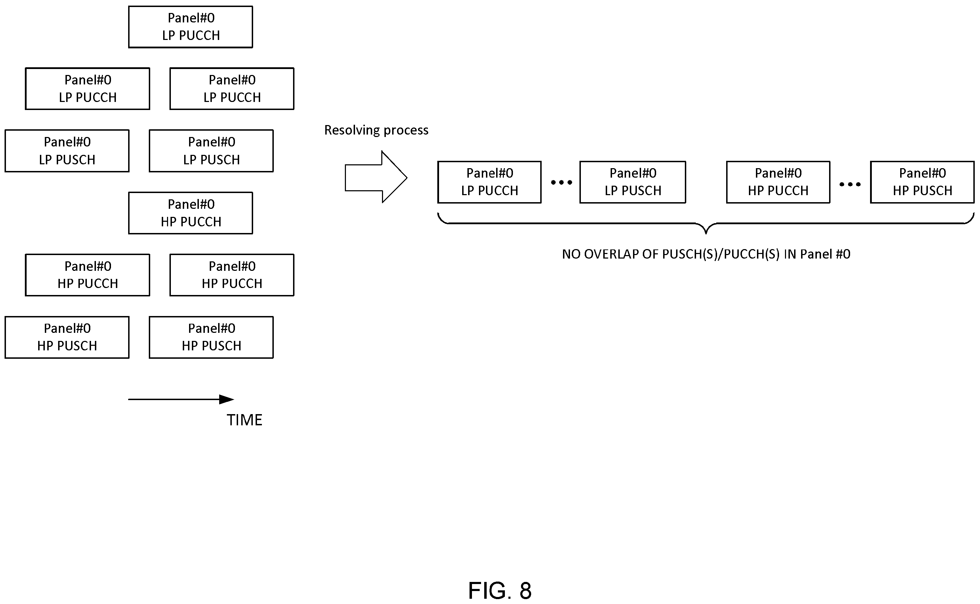

As a result of an overlap of a PUCCH/PUSCH having the same/different priorities in the same panel being resolved, only one PUCCH or PUSCH need be transmitted in the same panel. For example, as shown in FIG. 8, a PUSCH/PUCCH need be transmitted without overlapping each other in the time domain (only one PUCCH or PUSCH need be transmitted) by resolving an overlap in one panel (panel #0 in FIG. 8).

A result of resolving an overlap of a PUCCH/PUSCH having the same/different priorities in different panels may correspond to any one of case 1 to case 4 below.

### (Case 1)

Only one PUSCH or PUCCH may be transmitted. In other words, no overlapping PUCCH/PUSCH may exist.

### (Case 2)

A plurality of (for example, two) PUCCHs associated with different (for example, two) panels may be transmitted. In other words, a PUCCH associated with one panel and a PUCCH associated with another panel may be transmitted. In this case, the plurality of PUCCHs may overlap each other in the time domain.

### (Case 3)

A plurality of (for example, two) PUSCHs associated with different (for example, two) panels may be transmitted. In other words, a PUSCH associated with one panel and a PUSCH associated with another panel may be transmitted. In this case, the plurality of PUSCHs may overlap each other in the time domain.

### (Case 4)

A PUCCH and a PUSCH associated with different (for example, two) panels may be transmitted. In other words, a PUCCH associated with one panel and a PUSCH associated with another panel may be transmitted. In this case, the PUCCH and the PUSCH may overlap each other in the time domain.

At least one of cases 1 to 4 above may be supported (permitted). In other words, any combination of cases 1 to 4 above may be supported (permitted).

For example, all cases 1 to 4 above may be supported (permitted). For example, cases 1, 3, and 4 above may be supported (permitted). Only case 1 above may be supported (permitted).

The support of at least one of cases 1 to 4 above may be configured by using higher layer signaling (RRC/MAC CE) for a UE or may be determined based on a report of UE capability information.

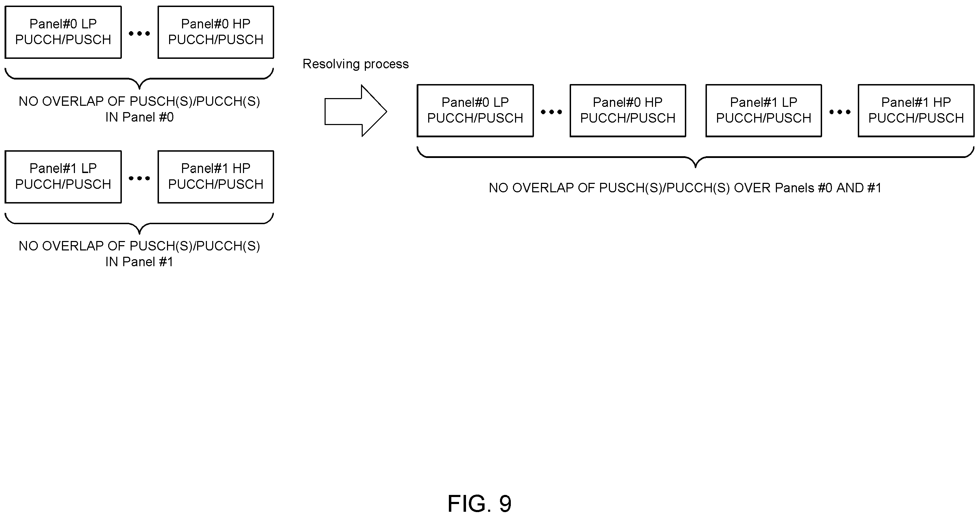

FIG. 9 is a diagram to show an example of PUCCH/PUSCH transmissions according to case 1. In the example shown in FIG. 9, in each panel (panel #0/#1), in a state of including no overlap of a PUCCH(s)/PUSCH(s), resolving of overlaps in panels #0 and #1 is further performed. This resolving results in a state of including no overlap of a PUCCH(s)/PUSCH(s) over a plurality of panels (panels #0 and #1).

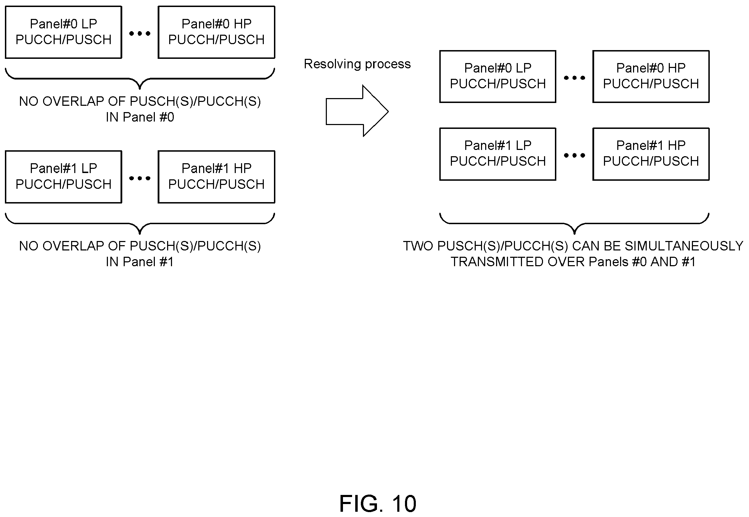

FIG. 10 is a diagram to show an example of PUCCH/PUSCH transmissions according to case 2/3/4. In the example shown in FIG. 10, in each panel (panel #0/#1), in a state of including no overlap of a PUCCH(s)/PUSCH(s), resolving of an overlap in panels #0 and #1 is further performed. This resolving consequently permits a state of including overlaps of a PUCCH(s)/PUSCH(s) over a plurality of panels (panels #0 and #1). In other words, a plurality of (for example, two) PUCCH(s)/PUSCH(s) may be transmitted over a plurality of panels (panels #0 and #1) in the same time domain.

According to the first embodiment described above, it is possible to appropriately control an overlap of PUCCH/PUSCH transmissions even when PUCCH/PUSCH simultaneous transmission using a plurality of panels (in particular, single-panel transmission) is performed.

### <Second Embodiment>

In a second embodiment, description will be given of an overlap between a single-panel PUSCH/PUCCH (first PUSCH/PUCCH) and a multi-panel PUSCH/PUCCH (second PUSCH/PUCCH).

The UE may perform handling of an overlap between a first PUSCH/PUCCH and a second PUSCH/PUCCH in accordance with a specific process.

The specific process may be defined in a specification in advance.

The UE may judge the handling of the overlap between the PUCCH(s)/PUSCH(s), based on at least one of whether the PUCCH(s)/PUSCH(s) have the same priority, whether the PUCCH(s)/PUSCH(s) are associated with the same panel, and whether the overlap is an overlap between a single-panel transmission and a multi-panel transmission.

The specific process may include, for example, at least one of processes A to L described in the first embodiment and processes M to T below.

### {Process M}

Resolve an overlap between a single-panel PUCCH transmission and a multi-panel PUCCH transmission having the same priority.

### {Process N}

Resolve an overlap between a single-panel PUSCH transmission and a multi-panel PUSCH transmission having the same priority.

### {Process O}

Resolve an overlap between a single-panel PUCCH transmission and a multi-panel PUSCH transmission having the same priority.

### {Process P}

Resolve an overlap between a single-panel PUSCH transmission and a multi-panel PUCCH transmission having the same priority.

### {Process Q}

Resolve an overlap between a single-panel PUCCH transmission and a multi-panel PUCCH transmission having different priorities.

### {Process R}

Resolve an overlap between a single-panel PUSCH transmission and a multi-panel PUSCH transmission having different priorities.

### {Process S}

Resolve an overlap between a single-panel PUCCH transmission and a multi-panel PUSCH transmission having different priorities.

### {Process T}

Resolve an overlap between a single-panel PUSCH transmission and a multi-panel PUCCH transmission having different priorities.

Note that it is to be easily understood by those skilled in the art that processes M to T above do not indicate that handling goes from process M to process T in this order.

In the present disclosure, a multi-panel PUSCH transmission may mean transmission of one PUSCH using a plurality of panels. In the present disclosure, a multi-panel PUCCH transmission may mean transmission of one PUCCH using a plurality of panels.

At least one of processes A to T above need not be defined.

For example, the UE need not assume/expect that an overlap corresponding to at least one of processes A to T above occurs.

For example, the UE need not assume/expect an overlap between a single-panel PUCCH transmission and a multi-panel PUCCH transmission having the same priority. In this case, process M above need not be defined.

For example, the UE need not assume/expect an overlap between a single-panel PUSCH transmission and a multi-panel PUSCH transmission having the same priority. In this case, process N above need not be defined.

For example, the UE need not assume/expect an overlap between a single-panel PUCCH transmission and a multi-panel PUSCH transmission having the same priority. In this case, process O above need not be defined.

For example, the UE need not assume/expect an overlap between a single-panel PUSCH transmission and a multi-panel PUCCH transmission having the same priority. In this case, process P above need not be defined.

For example, the UE need not assume/expect an overlap between a single-panel PUCCH transmission and a multi-panel PUCCH transmission having different priorities. In this case, process Q above need not be defined.

For example, the UE need not assume/expect an overlap between a single-panel PUSCH transmission and a multi-panel PUSCH transmission having different priorities. In this case, process R above need not be defined.

For example, the UE need not assume/expect an overlap between a single-panel PUCCH transmission and a multi-panel PUSCH transmission having different priorities. In this case, process S above need not be defined.

For example, the UE need not assume/expect an overlap between a single-panel PUSCH transmission and a multi-panel PUCCH transmission having different priorities. In this case, process T above need not be defined.

At least two of processes A to T above may be processed in parallel. In other words, at least two of processes A to T above may be judged at the same timing. For at least two of processes A to T above, the order of processing need not be defined.

The UE may perform overlap processing using at least one of processes A to L above. Then, the UE may perform overlap processing using at least one of processes M to T above.

The UE may follow at least one of the methods described in the first embodiment above, for the overlap processing using at least one of processes A to L above.

When the UE performs the overlap processing using at least one of processes M to T above, the UE may firstly perform processing on each overlap between a single-panel PUSCH/PUCCH and a single-panel PUSCH/PUCCH and then perform processing on each overlap between a single-panel PUSCH/PUCCH and a multi-panel PUSCH/PUCCH.

When the UE performs the overlap processing using at least one of processes M to T above, the UE may firstly perform processing on each overlap between a single-panel PUSCH/PUCCH and a multi-panel PUSCH/PUCCH and then perform processing on each overlap between a single-panel PUSCH/PUCCH and a single-panel PUSCH/PUCCH.

For example, the UE may perform processing on the PUSCH/PUCCH overlaps in the order of processes M, N, O, P, Q, R, S, and T above.

For example, the UE may perform overlap processing in the order of overlap processing related to the same priority, overlap processing related to different priorities, overlap processing related to channels of the same type, and overlap processing related to channels of different types.

Note that, although one example related to the order of processes M to T has been described above, the order of processes A to T is not limited to this. In other words, the order of processes A to T may be any order. In the present disclosure, comprehensive description is omitted for simplicity.

When the UE performs process M/N/O/P/Q/R/S/T above, the order of processing related to panels may further be defined.

The order of processing related to panels may be an order based on panel IDs, for example. For example, the UE may resolve PUSCH/PUCCH overlaps in an ascending order (or a descending order) of panel IDs. Specifically, the UE may resolve each overlap between a multi-panel PUSCH/PUCCH and a single-panel PUSCH/PUCCH related to panel #0 (or #1) and then resolve each overlap between a multi-panel PUSCH/PUCCH and a single-panel PUSCH/PUCCH related to panel #1 (or #0).

When the UE performs process M/N/O/P/Q/R/S/T above, the order of processing related to priorities may further be defined.

The order of processing related to panels may be an order based on priorities/priority indices, for example. For example, the UE may resolve the PUSCH/PUCCH overlaps in an ascending order (or a descending order) of priority indices. Specifically, the UE may resolve each overlap between a PUSCH(s)/PUCCH(s) having a higher (or lower) priority index and then resolve each overlap between a PUSCH(s)/PUCCH(s) having a lower (or higher) priority index.

According to the second embodiment described above, it is possible to appropriately control an overlap of PUCCH/PUSCH transmissions even when PUCCH/PUSCH simultaneous transmission using a plurality of panels is performed and also a single-panel PUCCH/PUSCH and a multi-panel PUCCH/PUSCH overlap with each other.

### <Third Embodiment>

In a third embodiment, description will be given of an overlap between a multi-panel PUSCH/PUCCH (first PUSCH/PUCCH) and a multi-panel PUSCH/PUCCH (second PUSCH/PUCCH).

The UE may perform handling of an overlap between a first PUSCH/PUCCH and a second PUSCH/PUCCH in accordance with a specific process.

The specific process may be defined in a specification in advance.

The UE may judge the handling of the overlap between the PUCCH(s)/PUSCH(s), based on at least one of whether the PUCCH(s)/PUSCH(s) have the same priority, whether the PUCCH(s)/PUSCH(s) are associated with the same panel, whether the overlap is an overlap between a single-panel transmission and a multi-panel transmission, and whether the overlap is an overlap between multi-panel transmissions.

The specific process may include, for example, at least one of processes A to L described in the first embodiment, processes M to T described in the second embodiment, and processes U to Z below.

### {Process U}

Resolve an overlap between a multi-panel PUCCH transmission and a multi-panel PUCCH transmission having the same priority.

### {Process V}

Resolve an overlap between a multi-panel PUSCH transmission and a multi-panel PUSCH transmission having the same priority.

### {Process W}

Resolve an overlap between a multi-panel PUCCH transmission and a multi-panel PUSCH transmission having the same priority.

### {Process X}

Resolve an overlap between a multi-panel PUCCH transmission and a multi-panel PUCCH transmission having different priorities.

### {Process Y}

Resolve an overlap between a multi-panel PUSCH transmission and a multi-panel PUSCH transmission having different priorities.

### {Process Z}

Resolve an overlap between a multi-panel PUCCH transmission and a multi-panel PUSCH transmission having different priorities.

Note that it is to be easily understood by those skilled in the art that processes U to Z above do not indicate that handling goes from process U to process Z in this order.

At least one of processes A to Z above need not be defined.

For example, the UE need not assume/expect that an overlap corresponding to at least one of processes A to Z above occurs.

For example, the UE need not assume/expect an overlap between a multi-panel PUCCH transmission and a multi-panel PUCCH transmission having the same priority. In this case, process U above need not be defined.

For example, the UE need not assume/expect an overlap between a multi-panel PUSCH transmission and a multi-panel PUSCH transmission having the same priority. In this case, process V above need not be defined.

For example, the UE need not assume/expect an overlap between a multi-panel PUCCH transmission and a multi-panel PUSCH transmission having the same priority. In this case, process W above need not be defined.

For example, the UE need not assume/expect an overlap between a multi-panel PUCCH transmission and a multi-panel PUCCH transmission having different priorities. In this case, process X above need not be defined.

For example, the UE need not assume/expect an overlap between a multi-panel PUSCH transmission and a multi-panel PUSCH transmission having different priorities. In this case, process Y above need not be defined.

For example, the UE need not assume/expect an overlap between a multi-panel PUCCH transmission and a multi-panel PUSCH transmission having different priorities. In this case, process Z above need not be defined.

At least two of processes A to Z above may be processed in parallel. In other words, at least two of processes A to Z above may be judged at the same timing. For at least two of processes A to Z above, the order of processing need not be defined.

The UE may perform overlap processing using at least one of processes A to L above. Then, the UE may perform overlap processing using at least one of processes M to T above. The UE may further perform overlap processing using at least one of processes U to Z above.

The UE may follow at least one of the methods described in the first embodiment above, for the overlap processing using at least one of processes A to L above.

The UE may follow at least one of the methods described in the second embodiment above, for the overlap processing using at least one of processes M to T above.

When the UE performs the overlap processing using at least one of processes U to Z above, the UE may firstly perform processing on each overlap between a single-panel PUSCH/PUCCH and a single-panel PUSCH/PUCCH. The UE may secondly perform overlap processing between a single-panel PUSCH/PUCCH and a multi-panel PUSCH/PUCCH. The UE may thirdly perform overlap processing between a multi-panel PUSCH/PUCCH and a multi-panel PUSCH/PUCCH.

When the UE performs the overlap processing using at least one of processes U to Z above, the UE may firstly perform processing on each overlap between a single-panel PUSCH/PUCCH and a single-panel PUSCH/PUCCH. The UE may secondly perform overlap processing between a multi-panel PUSCH/PUCCH and a multi-panel PUSCH/PUCCH The UE may thirdly perform overlap processing between a single-panel PUSCH/PUCCH and a multi-panel PUSCH/PUCCH.

When the UE performs the overlap processing using at least one of processes U to Z above, the UE may firstly perform processing on each overlap between a single-panel PUSCH/PUCCH and a multi-panel PUSCH/PUCCH. The UE may secondly perform overlap processing between a single-panel PUSCH/PUCCH and a single-panel PUSCH/PUCCH. The UE may thirdly perform overlap processing between a multi-panel PUSCH/PUCCH and a multi-panel PUSCH/PUCCH.

When the UE performs the overlap processing using at least one of processes U to Z above, the UE may firstly perform processing on each overlap between a single-panel PUSCH/PUCCH and a multi-panel PUSCH/PUCCH. The UE may secondly perform overlap processing between a multi-panel PUSCH/PUCCH and a multi-panel PUSCH/PUCCH The UE may thirdly perform overlap processing between a single-panel PUSCH/PUCCH and a single-panel PUSCH/PUCCH.

When the UE performs the overlap processing using at least one of processes U to Z above, the UE may firstly perform processing on each overlap between a multi-panel PUSCH/PUCCH and a multi-panel PUSCH/PUCCH. The UE may secondly perform overlap processing between a single-panel PUSCH/PUCCH and a multi-panel PUSCH/PUCCH. The UE may thirdly perform overlap processing between a single-panel PUSCH/PUCCH and a single-panel PUSCH/PUCCH.

When the UE performs the overlap processing using at least one of processes U to Z above, the UE may firstly perform processing on each overlap between a multi-panel PUSCH/PUCCH and a multi-panel PUSCH/PUCCH. The UE may secondly perform overlap processing between a single-panel PUSCH/PUCCH and a single-panel PUSCH/PUCCH. The UE may thirdly perform overlap processing between a single-panel PUSCH/PUCCH and a multi-panel PUSCH/PUCCH.

For example, the UE may perform processing on the PUSCH/PUCCH overlaps in the order of processes U, V, W, X, Y, and Z above.

For example, the UE may perform overlap processing in the order of overlap processing related to the same priority, overlap processing related to different priorities, overlap processing related to channels of the same type, and overlap processing related to channels of different types.

Note that, although one example related to the order of processes U to Z has been described above, the order of processes A to Z is not limited to this. In other words, the order of processes A to Z may be any order. In the present disclosure, comprehensive description is omitted for simplicity.

When the UE performs process U/V/W/X/Y/Z above, the order of processing related to priorities may further be defined.

The order of processing related to panels may be an order based on priorities/priority indices, for example. For example, the UE may resolve the PUSCH/PUCCH overlaps in an ascending order (or a descending order) of priority indices. Specifically, the UE may resolve each overlap between a PUSCH(s)/PUCCH(s) having a higher (or lower) priority index and then resolve each overlap between a PUSCH(s)/PUCCH(s) having a lower (or higher) priority index.

According to the third embodiment described above, it is possible to appropriately control an overlap of PUCCH/PUSCH transmissions even when PUCCH/PUSCH simultaneous transmission using a plurality of panels is performed and also a multi-panel PUCCH(s)/PUSCH(s) overlap each other.

### <Supplements>

At least one of the above-described embodiments may be applied only to a UE that has reported specific UE capability or that supports the specific UE capability.

The specific UE capability may indicate at least one of the following:
- supporting specific processing/operation/control/information for at least one of the above embodiments (for example, at least one of processing on each overlap between a single-panel PUSCH/PUCCH and a single-panel PUSCH/PUCCH, processing on each overlap between a single-panel PUSCH/PUCCH and a multi-panel PUSCH/PUCCH, and processing on each overlap between a multi-panel PUSCH/PUCCH and a multi-panel PUSCH/PUCCH)
- supporting simultaneous multi-panel transmission
- supporting simultaneous multi-panel transmission of a plurality of PUSCHs
- supporting simultaneous multi-panel transmission of a plurality of PUCCHs
- supporting simultaneous multi-panel transmission of a PUSCH and a PUCCH

The specific UE capability may be capability applied over all the frequencies (commonly irrespective of frequency), capability per frequency (for example, a cell, a band, a BWP), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured with specific information related to the above-described embodiment by higher layer signaling. For example, the specific information may be information indicating that simultaneous multi-panel UL transmission is enabled, any RRC parameter for a specific release (for example, Rel. 18), or the like.

When the UE does not support at least one of the specific UE capabilities or is not configured with the specific information, the UE may apply an Rel-15/16 operation, for example.

### (Supplementary Note)

Regarding one embodiment of the present disclosure, the following supplementary notes of the invention will be given.

### {Supplementary Note 1}

A terminal including: a control section that judges resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and a transmitting section that transmits at least one of the first UL channel and the second UL channel.

### {Supplementary Note 2}

The terminal according to supplementary note 1, wherein the control section judges to transmit only one UL channel in a same time domain.

### {Supplementary Note 3}

The terminal according to supplementary note 1 or 2, wherein the control section judges to transmit, by using a plurality of panels, one UL channel in each panel in a same time domain.

### {Supplementary Note 4}

The terminal according to any one of supplementary notes 1 to 3, wherein the control section judges resolving of the overlap, further based on whether each of the first UL channel and the second UL channel is a single-panel transmission or a multi-panel transmission.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

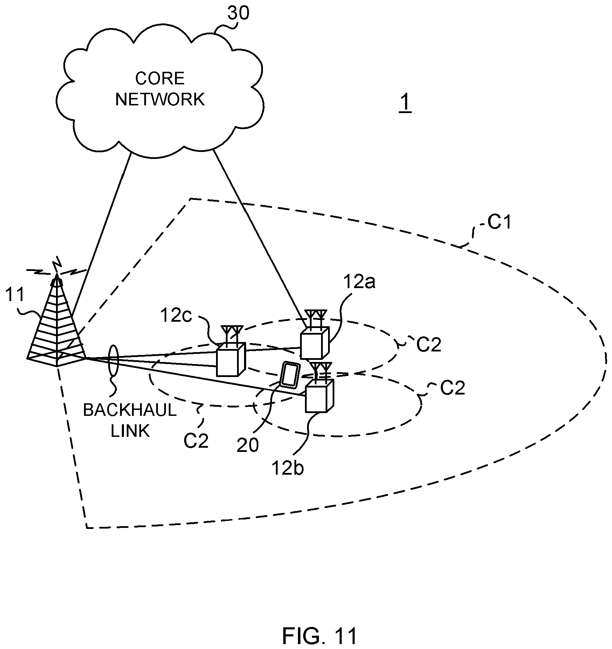

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

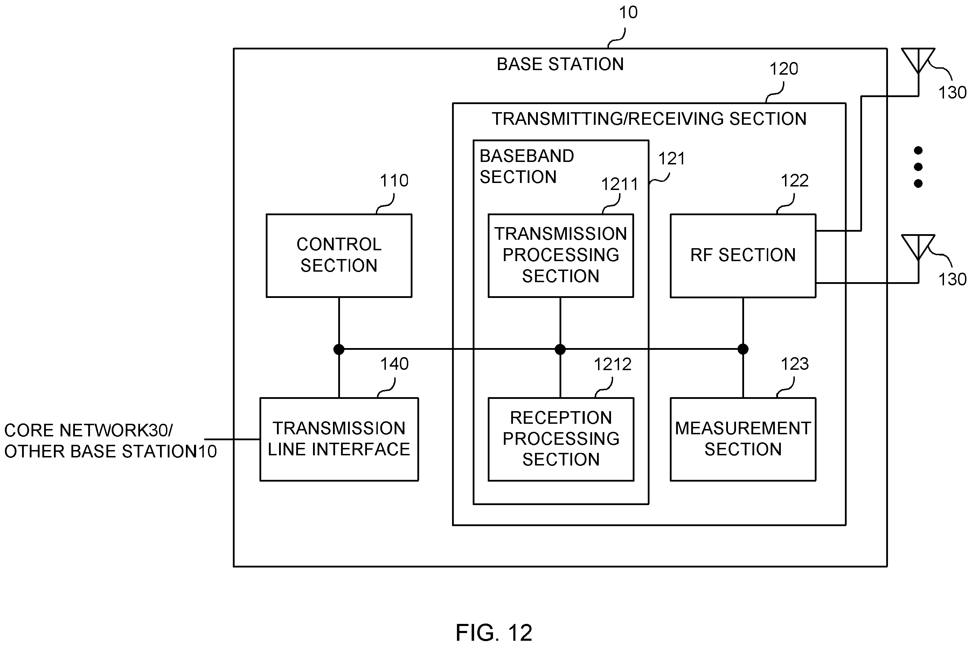

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section to be described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may judge resolving of an overlap between a first uplink (UL) channel and a second UL channel, based on whether the first UL channel and the second UL channel have the same priority, whether the first UL channel and the second UL channel are associated with a same panel, and whether the first UL channel and the second UL channel are of a same type. The transmitting/receiving section 120 may receive at least one of the first UL channel and the second UL channel (first embodiment).

### (User Terminal)

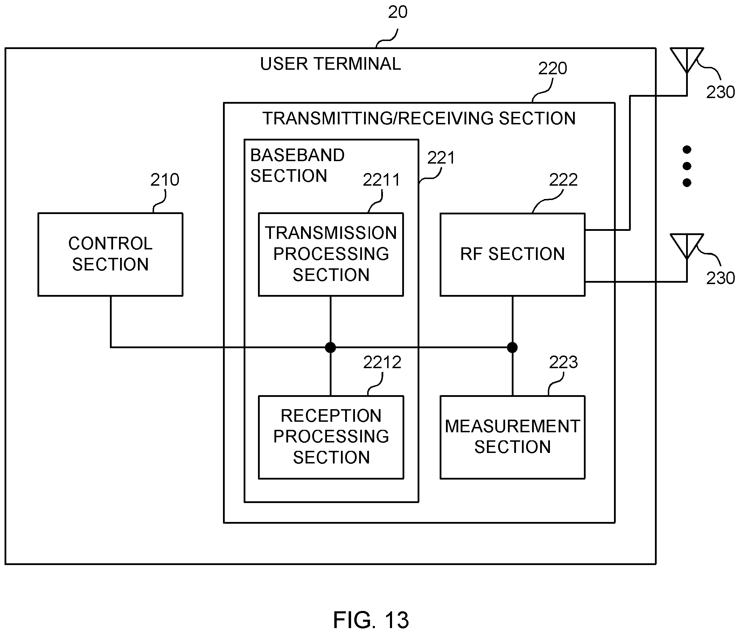

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section to be described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may judge resolving of an overlap between a first uplink (UL) channel and a second UL channel, based on whether the first UL channel and the second UL channel have the same priority, whether the first UL channel and the second UL channel are associated with a same panel, and whether the first UL channel and the second UL channel are of the same type. The transmitting/receiving section 220 may transmit at least one of the first UL channel and the second UL channel (first embodiment).

The control section 210 may judge to transmit only one UL channel in the same time domain (first embodiment).

The control section 210 may judge to transmit, by using a plurality of panels, one UL channel in each panel in the same time domain (first embodiment).

The control section 210 may judge resolving of the overlap, further based on whether each of the first UL channel and the second UL channel is a single-panel transmission or a multi-panel transmission (second/third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

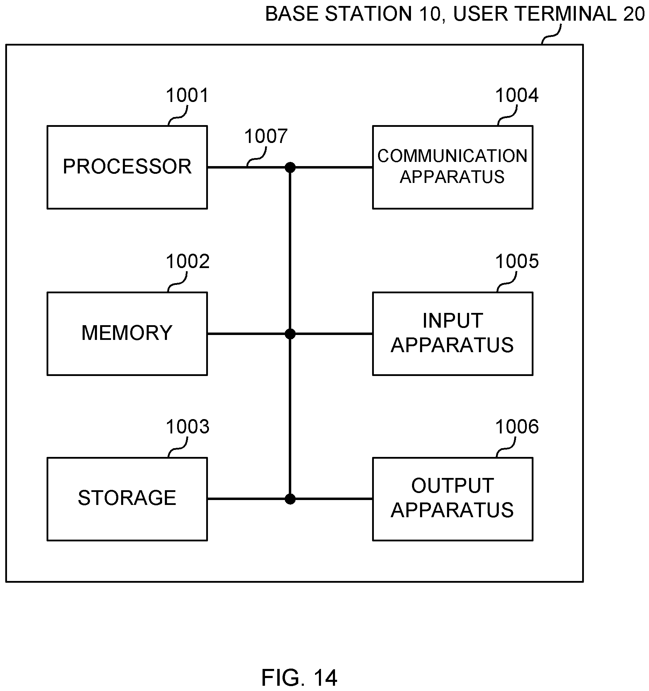

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a "base station transmits information to a terminal" may be interpreted as the "base station indicates control/operation based on the information, to the terminal," and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

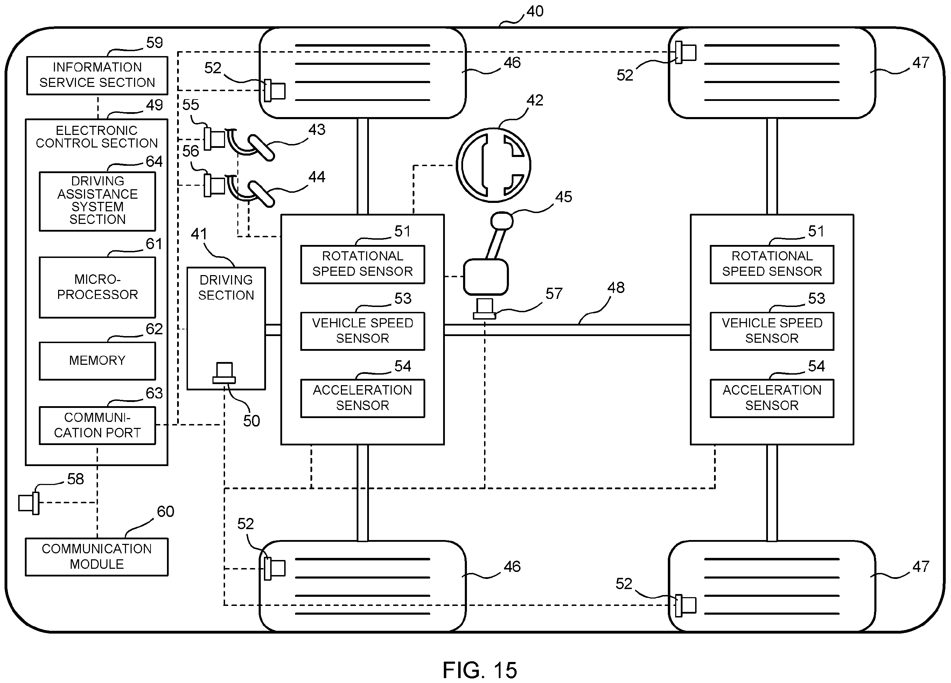

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" as used in the present disclosure does not mean "based only on," unless otherwise specified. In other words, the phrase "based on" means both "based only on" and "based at least on."

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that judges resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and
a transmitting section that transmits at least one of the first UL channel and the second UL channel.

2. The terminal according to claim 1, wherein
the control section judges to transmit only one UL channel in a same time domain.

3. The terminal according to claim 1, wherein
the control section judges to transmit, by using a plurality of panels, one UL channel in each panel in a same time domain.

4. The terminal according to claim 1, wherein
the control section judges resolving of the overlap, further based on whether each of the first UL channel and the second UL channel is a single-panel transmission or a multi-panel transmission.

5. A radio communication method for a terminal, the radio communication method comprising:
judging resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and
transmitting at least one of the first UL channel and the second UL channel.

6. A base station comprising:
a control section that judges resolving of an overlap between a first uplink (UL) channel and a second UL channel, based on whether the first UL channel and the second UL channel have a same priority, whether the first UL channel and the second UL channel are associated with a same panel, and whether the first UL channel and the second UL channel are of a same type; and
a receiving section that receives at least one of the first UL channel and the second UL channel.
